# EUROPÄISCHE PATENTSCHRIFT

(11) **EP 3 213 320 B1**
(45) Veröffentlichungstag und Bekanntmachung des Hinweises auf die Patenterteilung: **03.11.2021**
(21) Anmeldenummer: 15771079.9
(22) Anmeldetag: 25.09.2015
(51) Int. Cl.: G10K 11/00, G01F 1/66, G01F 23/296, G01F 15/18

(54) **ANORDNUNG ZUM AUSSENDEN UND/ODER EMPFANGEN EINES ULTRASCHALL-NUTZSIGNALS UND ULTRASCHALL-DURCHFLUSSMESSGERÄT**
ARRANGEMENT FOR TRANSMITTING AND/OR RECEIVING A USEFUL ULTRASOUND SIGNAL, AND ULTRASONIC FLOW METER
DISPOSITIF D'ÉMISSION ET/OU DE RÉCEPTION D'UN SIGNAL UTILE ULTRASONORE ET DÉBITMÈTRE À ULTRASONS

(30) Priorität: 27.10.2014 DE 102014115592
(43) Veröffentlichungstag der Anmeldung: 06.09.2017
(73) Patentinhaber: Endress+Hauser Flowtec AG, 4153 Reinach (CH)
(72) Erfinder: BERBERIG, Oliver, 79639 Grenzach-Wyhlen (DE); BERGER, Andreas, 79686 Hasel-Glashütten (DE); BEZDEK, Michal, CH-4147 Aesch (CH); UEBERSCHLAG, Pierre, F-68300 Saint-Louis (FR)
(74) Vertreter: Andres, Angelika Maria
(86) Internationale Anmeldenummer: PCT/EP2015/072054
(87) Internationale Veröffentlichungsnummer: WO 2016/066342

(56) Entgegenhaltungen:
- EP-A1- 1 340 964
- DE-A1-102010 064 119
- DE-A1-102011 090 080
- DE-C2- 3 219 626
- JP-A- 2013 253 791
- US-A1- 2013 289 593

## Beschreibung

Die vorliegende Erfindung betrifft eine Anordnung zum Aussenden und/oder Empfangen eines Ultraschall-Nutzsignals nach dem Oberbegriff des Anspruchs 1 und ein Ultraschall-Durchflussmessgerät.

Es ist bekannt, dass bei Ultraschall-Transducern ein möglichst hohes Verhältnis aus Nutzsignal (akustische Energie über das Messmedium) zu Störsignal (akustische Energie über das Messrohr) angestrebt wird. Dieses Verhältnis wird auch als Signal-to-Noise-Ratio oder SNR bezeichnet. Ein großes SNR wird insbesondere bei Ultraschall-Inline-Durchflusszählern (DFZ) angestrebt, die bei gasförmigen Medien zum Einsatz kommen, weil hierbei die Einkopplung der akustischen Energie vom harten Festkörper-Transducer (mit hoher akustischer Impedanz) ins "weiche", gasförmige Medium (mit niedriger akustischer Impedanz) besonders ineffizient ist, also besonders wenig Energie eingekoppelt werden kann. Um die geringe akustische Energie am gegenüberliegenden Transducer sicher empfangen und auswerten zu können, ist es von entscheidender Bedeutung, dass Störsignale, die z.B. über die Messrohrwände gelaufen sind, vom gegenüberliegenden Transducer fernzuhalten. Hierfür ist ein hohes SNR maßgeblich.

Aus der Literatur und Patentschriften ist eine Vielzahl an Lösungsansätzen für diese Aufgabenstellung bekannt. Hierzu zählt z.B. der Vorschlag in DE19723488A1, in dem der US-Transducer am Umfang mit mehreren Gumminoppen versehen wird, die es dann ermöglichen, den US-Transducer in einer Vertiefung mit umlaufenden Nut vom Messrohr akustisch entkoppelt einzuklippen. Zur Vermeidung eines akustischen Kurzschlusses zw. US-Transducer und Messrohrvertiefung wird vorgeschlagen, den verbleibenden Ringspalt mit "dauerelastischem, geschlossenporigem PU-Schaum" aufzufüllen. Der Nachteil dieser Lösung besteht darin, dass es im Laufe der Betriebszeit des US-DFZ zu Veränderungen an diesem PU-Schaum kommen kann, die dazu führen, dass er entweder seine elastischen Eigenschaften verliert oder sich zersetzt. In beiden Fällen würde die akustisch entkoppelnde Wirkung verloren gehen und dazu führen, dass die Körperschallanteile immer stärker zunehmen und schließlich eine Auswertung der Nutzsignals unterbinden würden.

In der EP1340964A1 wird eine Geometrie vorgeschlagen, die radiale Schwingungen einer Schallerzeugerplatte über verschachtelt angeordnete Ringe und Hülsen, sogenannte Filterelemente, in eine Torsionsauslenkung übersetzt und dadurch die Schalleinkopplung in die Gehäuseaufhängung minimiert. Der Nachteil dieser Lösung liegt darin, dass das Transducergehäuse aufgrund der vielen Filterelemente aus einer Vielzahl an Bauteilen besteht, die alle dauerhaft dichtend miteinander verbunden werden müssen. Darüber hinaus funktioniert die Entkopplung nur gegenüber der axial zurückversetzten Gehäuseaufhängung: sobald der Ringspalt zwischen Schallerzeugerplatte und Transducerbohrung überbrückt wird, sei es durch Kondensat oder durch Festkörperablagerungen, werden die radialen Schwingungsanteile ungedämpft auf das Messrohr übertragen, und geht damit eine sichere Auswertung des Nutzsignals verloren.

Die EP2148322A2 offenbart ein US-Transducergehäuse, das ebenfalls Körperschallfilterelemente aufweist. Die Elemente sind jedoch nicht direkt an einer axial und radial schwingenden Schallerzeugungsplatte, sondern ein Stück davon entfernt zwischen dieser Platte und einer Gehäuseaufhängung am Messrohr platziert. Die Besonderheit dieser Filterelemente liegt darin, dass mindestens zwei davon zum Einsatz kommen, und dass sie eine der Schallerzeugungsfrequenz angepasste Resonanzfrequenz aufweisen. Die Nachteile dieser Lösung sind wieder identisch zu den vorgenannten bezüglich der Geometrie in der EP1340964A1.

Die DE 10 2010 064 119 A1 offenbart ein mediumsberührendes Durchflussmessgerät, welches ein in das Medium hineinragendes Gehäuse aufweist, in dem der Ultraschallwandler angeordnet ist und welches über ein Verbindungselement in Form einer Dichtung zum Zweck einer akustischen Dämpfung von Körperschall auf das Messrohr mit dem Messrohr verbunden ist.

Die DE 32 19 626 A1 offenbart eine Vorrichtung zur Feststellung des Erreichens eines vorbestimmten Füllstandes in einem Behälter, umfassend einen in den Behälter hineinragenden Schwingstab und ein mechanisches Schwingungsentkopplungssystem, welches eine aktive und passive Schwingungsentkopplung zwischen dem Behälter und dem Schwingstab bewirkt.

Die EP 1 340 964 A1 offenbart eine Ultraschallwandleranordnung mit einem Ultraschallwandler und mit einem Filter zum Unterdrücken von auf das Gehäuse übersprechende Ultraschallsignale, über den der Ultraschallwandler gehalten ist. Der Filter weist Umlenkabschnitt auf, welcher dazu eingerichtet ist eine radiale Auslenkung eines ersten Teilstückes in eine torsionale Auslenkung eines zweiten Teilstückes umzusetzen.

Aus dem Stand der Technik ist ein relativ neuartiges generatives Fertigungsverfahren, "selektives Laserschmelzen", bekannt, welches auf eine Dissertation aus dem Jahre 1999 zurückgeht (Wilhelm Meiners: Direktes Selektives Laser Sintern einkomponentiger metallischer Werkstoffe, Dissertation, RWTH Aachen 1999). Es wurde anschließend maßgeblich am Fraunhofer-Institut für Lasertechnik (ILT) in Aachen in Kooperation mit Dr. Matthias Fockele und Dr. Dieter Schwarze weiterentwickelt. Das Verfahren ist dadurch charakterisiert, dass der zu verarbeitende Werkstoff in Pulverform in einer dünnen Schicht auf einer Grundplatte aufgebracht und dann mittels Laserstrahlung lokal vollständig umgeschmolzen wird, sodass sich nach der Erstarrung eine feste und mediumsdichte Materialschicht bildet. Anschließend wird die Grundplatte um den Betrag einer Schichtdicke abgesenkt und erneut Pulver aufgetragen. Dieser Zyklus wird solange wiederholt, bis alle Schichten umgeschmolzen sind. Typische Schichtstärken für alle Materialien sind 20 - 100 µm. Dabei verwendete Werkstoffe sind vielfältig und umfassen eine Vielzahl von Metallen und Metalllegierungen. Die Daten für die Führung des Laserstrahls werden aus einem 3D-CAD-Körper mittels Software erzeugt. Um die Kontaminierung des Werkstoffs mit Sauerstoff zu vermeiden findet der Prozess unter Schutzgasatmosphäre mit Argon oder Stickstoff statt.

Gegenüber konventionellen Fertigungsverfahren wie z.B. Gussverfahren zeichnet sich das Laserschmelzen dadurch aus, dass Werkzeuge oder Formen entfallen (formlose Fertigung) und dadurch die Prototypenbauzeit oder Produkteinführungszeit reduziert werden kann. Gegenüber dem CNC-Bearbeiten von Halbzeugen besteht der Vorteil einer immensen Geometriefreiheit, die Bauteilformen ermöglicht, die mit konventionellen Verfahren nicht oder nur mit großem Aufwand herstellbar sind. Hierzu zählen beispielsweise Hinterschnitte oder Trennwände im 20µm-Dickenbereich.

Ausgehend vom vorgenannten Stand der Technik ist es nunmehr Aufgabe der vorliegenden Erfindung alternative Vibrationsentkopplungselemente bereitzustellen, welche in kompakter Bauweise ausgestaltet sind und eine wirksame Vibrationsentkopplung des Körperschalls zu einem Behältnis hin ermöglichen.

Unter Körperschall sind diejenigen vom Piezoelement ausgesandten Schallanteile zu verstehen, die sich ausschließlich in Festkörpern ausbreiten. Da elastische Festkörper im Gegensatz zu einem Fluid neben Normalspannung auch Schwerspannungen aufnehmen können lassen sich bei Körperschallwellen Longitudinal- und Transversalwellen unterscheiden. Beide Wellenarten führen beim Ultraschall-Empfangstransducer zu einer Anregung, die sich im auszuwertenden elektrischen Empfangssignal wiederfindet. Da diese Anregungen in keinem Bezug zur Messgröße stehen sind sie störend, insbesondere weil sie die Auswertung des Nutzsignals hinsichtlich der Messgröße erschweren. Aus diesem Grund wird in US-Durchflussmessgeräten und US-Füllstandssensoren eine maximale Körperschallentkopplung angestrebt.

Die vorliegende Erfindung löst diese Aufgabe durch ein Vibrationsentkopplungselement mit den Merkmalen des Anspruchs 1.

Eine Anordnung zum Aussenden und/oder Empfangen eines Ultraschall-Nutzsignals in ein Messmedium umfasst ein Vibrationsentkopplungselement zum Festlegen mindestens eines Ultraschallwandlers in einem Behältnis und den zumindest einen Ultraschallwandler. Ein Ultraschall-Nutzsignal ist dabei beispielsweise ein Signal welches Informationen über den Durchfluss, die Schallgeschwindigkeit, den Füllstand und/oder die Art des Messmediums, bis hin zu Einzelkonzentrationen einer Komponente in einem Stoffgemisch, enthält. Aus dem Ultraschall-Nutzsignal kann z.B. eine Laufzeitdifferenz und/oder eine Laufzeit im jeweiligen Messmedium ermittelt werden.

Das Vibrationsentkopplungselement weist zudem einen Grundkörper zur Festlegung des Vibrationsentkopplungselements an dem an dem Behältnis angeordneten Sensorstutzen oder direkt an der Behältniswand auf. Der Grundkörper kann unterschiedlich ausgeformt sein. Er kann beispielsweise plattenförmig ausgebildet sein. In einer besonders bevorzugten Ausführungsvariante kann der Grundkörper als eine gewölbte Platte ausgestaltet sein. Dadurch kann ein Anschluss an das Behältnis erfolgen, der einen Sensorstutzen überflüssig macht. Der Grundkörper und eine erste Schnittstelle zur Halterung des Ultraschallwandlers dienen als Bezugspunkte, zwischen denen ein spezielles Strukturelement angeordnet ist, welches eine Vibrationsentkopplung ermöglicht.

Der Grundkörper weist die erste Schnittstelle auf, an welcher der Ultraschallwandler an das Behältnis oder an einen daran angeordneten Sensorstutzen anschließbar bzw. mit dem Behältnis oder dem Sensorstutzen verbunden ist. Bei dem Behältnis kann es sich im Fall eines Durchflussmessgerätes um ein Messrohr handeln. Bei Füllstandsmessgeräten kann es sich um einen Tank handeln. Ein Sensorstutzen kann insbesondere an das Messrohr oder den Tank angeschweißt sein. Dieser Sensorstutzen dient der Verankerung der Anordnung am Messrohr.

Eine Schnittstelle ist im Rahmen der vorliegenden Erfindung derart zu verstehen, dass es sich dabei um eine zweidimensionale Fläche handelt, an welcher ein Formenübergang oder ein Bauteilübergang erfolgt. Ein Formenübergang ist in diesem Zusammenhang der Übergang von einer geometrischen Form in eine andere, so z.B. der Übergang von einem Stab zu einer Kugel. Ein Bauteilübergang ist demgegenüber der Übergang zweier Einzelbauteile, welche miteinander verbunden sind. Übliche Verbindungstechniken zweier Bauteile sind beispielsweise Schrauben, Kleben oder Schweißen, wobei die besagte Schnittstelle die Fläche ist, mit welcher ein Bauteil mit einem anderen verklebt oder verschweißt wird. Im Falle des Verschraubens ist die besagte Schnittstelle so z.B. die Gewindefläche.

Das Vibrationsentkopplungselement weist zudem eine zweite Schnittstelle zur Halterung eines Ultraschallwandlers auf. An dieser zweiten Schnittstelle kann der Ultraschallwandler festgelegt werden.

Der Ultraschallwandler umfasst zumindest ein Piezoelement. Der Ultraschallwandler kann allerdings auch zusätzlich einen Halter bzw. ein Halteelement umfassen, in welchem das Piezoelement angeordnet ist. Er kann insbesondere auch ein Abstrahlelement, z.B. mit einer Abstrahlplatte, enthalten, durch welches die Ultraschallsignale des Piezoelements durchgeleitet und an das Messmedium abgegeben werden. Der Ultraschallwandler kann zudem eine oder mehrere Koppelschichten oder Anpassungsschichten umfassen. Eine bevorzugte Koppelschicht ist dabei eine lambda/4-Koppelschicht.

Das Vibrationsentkopplungselement sorgt für eine Dämpfung der Vibrationen, welche u.a. durch den Körperschall hervorgerufen werden. Das Vibrationsentkopplungselement kann unterschiedlich geometrisch ausgestaltet sein. Die Vibrationsdämpfung kann durch unterschiedliche geometrische Merkmale erreicht werden, so dass sich das Vibrationsentkopplungselement am Besten in funktionaler Weise definieren lässt. Diese Vibrationsentkopplung bzw. Vibrationsdämpfung des Vibrationsentkopplungselements kann derart definiert werden, dass die Amplitude des im Medium übertragenen Nutzsignals, also das eigentliche Messsignal, unter Referenzbedingungen und im Frequenzbereich des Nutzsignals um mehr als 20 dB grösser ausfällt als die Amplitude des über die Wand des Behältnisses übergetragenen Störsignals, welches durch Körperschall hervorgerufen wird. Bei den vorgenannten Amplituden handelt es sich vorzugsweise um die sogenannte Peak-to-Peak Amplitude.

In einer bevorzugten Ausführungsvariante fällt die Amplitude, vorzugsweise die Peak-to-Peak Amplitude, des im Medium übertragenen Nutzsignals, also das eigentliche Messsignal, unter Referenzbedingungen und im Frequenzbereich des Nutzsignals um mehr als 30 dB, insbesondere mehr als 40 dB grösser aus als die Amplitude des über die erste Schnittstelle und des über die Wand des Behältnisses übergetragenen Störsignals welches durch Körperschall hervorgerufen wird. Eine Vibrationsentkopplung von 30 dB, ja sogar 40 dB, kann mit den in den Figuren dargestellten Ausführungsbeispielen erreicht werden.

Die besagten Referenzbedingungen sind Folgende: Temperatur = 20°C, Druck im Behältnis, z.B. im Messrohr oder Tank, bzw. an der Einkopplungsfläche = 1 bar absolut, das Referenz-Messmedium ist Luft für Messgeräte, z.B. Durchflussmessgeräte, welche als Gasgeräte ausgelegt sind oder Wasser für Messgeräte die als Flüssiggeräte ausgelegt sind. Unter Referenzbedingungen liegt kein Durchfluss des Messmediums im Messrohr vor.

Die Ultraschall-Nutzsignale werden durch eine Einkopplungsfläche gerichtet an das Messmedium abgegeben. Demgegenüber werden die Körperschall-Störsignale in alle Richtungen des Festkörpers ausgesandt, der zur Festlegung des Piezoelements dient. Damit findet auch eine Übertragung auf das Behältnis, beispielsweise auf ein Messrohr, statt.

Die besagte Einkopplungsfläche kann u.a. einer Haltevorrichtung des Ultraschallwandlers zugeordnet sein. Alternativ kann die Einkopplungsfläche auch Teil einer Aufnahme für den Ultraschallwandler sein, welche in diesem Fall dem Vibrationsentkopplungselement zugeordnet ist.

Das besagte Strukturelement ist als Festkörper ausgebildet. Dieser Festkörper weist jeweils eine oder mehrere Schnittstellen mit anderen Elementen des Vibrationsentkopplungselements auf. Die Dicke des Materials an der Schnittstelle(n) ist insbesondere mehr als zweimal kleiner als die Dicke des Festkörpers. Das vorgenannte Strukturelement weist in der erfindungsgemäßen Ausgestaltungsvariante eine weitestgehend kugel-, ellipsoid-, torus- oder vielflächig-polyederförmige Gestalt auf, da diese geometrischen Formen sich als besonders günstig zur Schallentkopplung erwiesen haben. Der Grund hierfür liegt darin begründet, dass der Schall in diesen Geometrien relativ gleichmäßig in alle Richtungen verteilt und gestreut wird, wodurch eine besonders hohe Schalldissipationsrate erzielt wird. Zudem weist eine Kugel lediglich eine einzige Resonanzfrequenz in alle Richtungen auf.

Das Strukturelement bzw. die Strukturelemente ist bzw. sind gemäß einer Weiterbildung der Erfindung im Wesentlichen massiv. Insbesondere, beträgt die Masse eines Strukturelements mindestens 80%, beispielsweise mindestens 90%, bevorzugt mindestens 95% der Masse eines mit dem Strukturelement formgleichen massiven Referenzkörpers beträgt, der aus dem gleichen Werkstoff wie das Strukturelement besteht. Die Massenabweichungen gegenüber dem Referenzkörper, können durch ggf. vorhandene Kanäle, beispielsweise für Kabeldurchführungen zustande kommen.

Um Umgehungslösungen von Strukturelementen vorzubeugen, welche in kleinen Teilbereichen der Oberflächen abgeplattete Bereiche aufweisen weist das Strukturelement eine weitestgehend kugel-, ellipsoid-, torus- oder vielflächig-polyederförmige Gestalt auf. Unter einer solchen Gestalt versteht man im Sinne der vorliegenden Erfindung einen Körper, dessen Oberfläche um bis zu 50% des maximalen Durchmessers des jeweiligen Strukturelements von der idealen Kontur im Sinne einer Profilformtoleranz einer Fläche nach DIN ISO 1101 (aktuelle Norm in der Fassung z.Z. der prioritätsbegründenden Erstanmeldung) abweichen darf. Vorzugsweise weicht die Gestalt nur um 20% des maximalen Durchmessers des jeweiligen Strukturelements von der idealen Kontur ab.

Es ist von Vorteil, wenn zumindest ein Verbindungselement zwischen dem Strukturelement und anderen Elementen des Vibrationsentkopplungselements als stabförmiges Verbindungselement ausgebildet ist, so dass dieser Stab bzw. diese Strebe bei Körperschallschwingungen gestaucht, gestreckt, gebogen oder tordiert werden und dadurch einen zusätzlichen Beitrag zur Vibrationsentkopplung leisten. Daher ist das Strukturelement erfindungsgemäß über gebogene, stabförmige Verbindungselemente mit der zweiten Schnittstelle und dem Grundkörper verbunden.

Weitere vorteilhafte Ausgestaltungen der Erfindung sind Gegenstand der Unteransprüche.

Das Vibrationsentkopplungselement kann insbesondere monolithisch aufgebaut sein. Korrosionserscheinungen an etwaigen Nahtstellen oder ein Ablösen einzelner geometrischer Elemente durch Ermüdungserscheinungen an Verbindungsstellen werden vorteilhaft vermieden. In einer bevorzugten Ausgestaltungsvariante kann das stabförmige Verbindungselement als Hohlstrebe ausgebildet sein.

Die Länge der stabförmigen Verbindungselemente kann vorzugsweise größer oder gleich lambda/8 sein, vorzugsweise größer oder gleich lambda/4, des Ultraschallsignals, um so eine besonders effektive Vibrationsentkopplung zu erreichen. Lambda ist die Wellenlänge des Ultraschalls in dem Medium.

Das Vibrationsentkopplungselement kann als ein metallisches Bauteil ausgebildet sein. Es besteht vorteilhaft zumindest bereichsweise aus einem der folgenden Materialien:
a) Stahl, insbesondere Edelstahl oder Werkzeugstahl;
b) Titan oder einer Titanlegierung;
c) einer Nickelbasislegierung,
d) Aluminium oder einer Aluminiumlegierung
e) einer Chrom-Cobalt-Molybdän-Legierung
f) einer Bronzelegierung
g) einer Edelmetalllegierung
h) einer Kupferlegierungen

Bevorzugte Materialien für die mediumsberührenden und damit korrosionsanfälligen Flächen von Ultraschall-Transducern sind insbesondere Titan und seine Legierungen, Nickelbasislegierungen sowie Edelstähle. Aufgrund seiner relativ geringen Dichte von ca. 4.5 kg/dm³ und einer damit deutlich geringeren akustischen Impedanz gegenüber Edelstahl mit ca. 7.9 kg/dm³ ist Titan als Material für die Struktur, die die Schallwellen ins Medium überträgt besonders bevorzugt. Andererseits lässt sich Titan aufgrund seiner hohen Reaktivität mit vielen Medien bei erhöhten Temperaturen und/oder erhöhtem Druck nur sehr aufwändig mechanisch bearbeiten. Deshalb bietet sich eine Formgebung mittels selektivem Laserschmelzen besonders bevorzugt an.

Das Vibrationsentkopplungselement kann vorteilhaft einen integral ausgebildeten Kanal zur Führung eines Strom- und/oder Signalkabels aufweisen, welcher Kanal durch das Strukturelement verläuft. Dadurch wird das Strom- und/oder Signalkabel durchgängig über den gesamten Verlauf des Vibrationsentkopplungselements vor Schädigung geschützt.

Es ist zudem für eine verbesserte Vibrationsentkopplung von Vorteil, wenn zwischen der zweiten Schnittstelle zur Halterung des Ultraschallwandlers und dem Grundkörper eine offene Struktur vorgesehen ist.

Das Vibrationsentkopplungselement kann vorzugsweise durch selektives Laserschmelzen hergestellt werden. Weniger bevorzugte Alternativen sind insbesondere Gussverfahren, welche zeit- und kostenintensiv sind. Durch das Verfahren des selektiven Laserschmelzens lassen sich insbesondere auch Vibrationsentkopplungselemente mit komplexen geometrischen Strukturelementen für eine besonders gute Vibrationsentkopplung oder Vibrationsdämpfung in effizienter Weise herstellen.

Nach ihrer Herstellung weisen mittels selektivem Laserschmelzen hergestellte Bauteile eine gewisse Oberflächenrauhigkeit auf, die vom sequentiellen Schichtaufbau herrührt. Dies lässt sich sowohl durch ein mattes Aussehen als auch durch spürbare Unebenheiten beim Darüberfahren mit dem Fingernagel erkennen. Demgegenüber verfügen Drehteile i.d.R. über eine glatte Oberfläche, d.h. die Oberfläche glänzt, und mit dem Fingernagel sind keine Unebenheiten zu spüren.

Beim selektiven LaserSchmelzen (SLS) beträgt die minimale Schichtdicke von zwei aufeinander folgenden Pulverschichten minimal ca. 20 µm. Daraus folgt, dass Strukturen, die in vertikaler Richtung verlaufen, sich ebenfalls nur in dieser Dimension auflösen lassen, d.h. die effektive Rauheit bewegt sich in dieser Größenordnung. Daraus folgt auch, dass die Oberflächengüte von SLS-Bauteilen nur ca. "halb so glatt" ist wie die von typischen Drehteilen. Die mittlere Oberflächenrauhigkeit Ra entlang einer Richtung auf der Oberfläche des durch selektives Laserschmelzen hergestellten Vibrationsentkopplungselements beträgt typischerweise mehr als Ra = 3,2 µm. Die Oberflächenrauhigkeit kann mittels einem Rauheitsmesser, z.B. dem PCE RT 1200, ermittelt werden. Eine solche Oberfläche erscheint beim Darüberfahren mit dem Fingernagel als leicht uneben, und wirkt auch optisch leicht uneben. Die durch Laserschmelzen hergestellte Oberfläche glänzt somit nicht, sondern ist "stumpf".

Die durch Laserschmelzen hergestellte Oberfläche kann nachbearbeitet, insbesondere geglättet werden. Allerdings kann man je nach Art der Nachbearbeitung an besonders filigranen oder komplexen Stellen des Vibrationsentkopplungselements nach wie vor rauhe Bereiche erkennen.

Lediglich durch Gussverfahren, insbesondere durch zeit- und kostenintensive Feinguss- oder Kreativgussverfahren, können einzelne der nachfolgend beschriebenen und in den Figuren dargestellten Vibrationsentkopplungselemente hergestellt werden. Allerdings unterliegen Gießverfahren auch gewissen Grenzen. So sind durch selektives Laserschmelzen dünnwandigere Membranen realisierbar als bei Gießverfahren.

Das Vibrationsentkopplungselement ist direkt in eine im Behältnis eingebrachte Öffnung, insbesondere ohne Verbindung durch einen Sensorstutzen, einsetzbar. Hierfür ist das Vibrationsentkopplungselement entsprechend geometrisch ausgestaltet. Es sind dabei verschiedenste Geometrievarianten vorstellbar. Insbesondere weist das Verbindungsentkopplungselement zusammen mit der Außenwandung des Behältnisses eine geschlossene Außenkontur auf.

Das Vibrationsentkopplungselement kann einen integral ausgebildeten Kanal zur Führung eines Strom und/oder Signalkabels aufweisen. Dieser Kanal bietet einen Schutz vor Mediumskontakt sowie mechanischer Beschädigung, und vermindert Kontaktierungsprobleme. Ein derartiger Kanal ist beispielsweise ebenfalls durch selektives Laserschmelzen realisierbar und kann beim sequentiellen Aufbau des Vibrationsentkopplungselements in sehr filigraner Form und/oder in das oder die Vibrationsentkopplungselemente integriert mit aufgebaut werden.

Das erfindungsgemäße Ultraschall-Durchflussmessgerät kann insbesondere nach dem bekannten Prinzip der Laufzeitdifferenzmethode betrieben werden. Da Ultraschallwandler sowohl im Sendemodus als auch im Empfangsmodus betrieben werden können, kann ein einzelner US-Transducer sowohl dem Aussenden als auch dem Empfangen von Ultraschallnutzsignalen dienen. Insbesondere weist das beschriebene Durchflussmessgerät zwei erfindungsgemäße Anordnungen auf, von denen sich während eines sogenannten Ultraschall-Schusses eine Anordnung im Sendebetrieb und eine Anordnung im Empfangsbetrieb befindet. Diese Ultraschallnutzsignale sind Messsignale, welche abhängig sind von einer Prozessgröße, wie z.B. dem Durchfluss oder dem Füllstand.

Besonders bevorzugt wird das Vibrationsentkopplungselement in einem Ultraschall-Durchflussmessgerät eingesetzt, welches einen Durchfluss von Gasen ermittelt. Die Arbeitsfrequenz dieser Geräte liegt bei mehr als 80 kHz, insbesondere zwischen 90 und 210 kHz, wobei die Höhe der verwendeten Arbeitsfrequenz von der Nennweite des Messrohres und dem Messmedium abhängt. Der Arbeitsfrequenzbereich eines Durchflussmessgerätes kann somit breit gewählt werden und vorzugsweise zwischen 20 kHz bis 500 kHz, insbesondere zwischen 40 bis 300 kHz, betragen.

Das Ultraschall-Durchflussmessgerät ist im Zusammenhang der vorliegenden Erfindung bevorzugt ein Feldgerät der Prozessmesstechnik.

Nachfolgend werden weitere vorteilhafte Ausgestaltungsvarianten näher erläutert.

Das Vibrationsentkopplungselement weist vorteilhaft einen Grundkörper zur Festlegung des Vibrationsentkopplungselements an dem Sensorstutzen oder dem Behältnis auf, sowie eine zweite Schnittstelle zur Halterung eines Ultraschallwandlers, wobei zwischen der zweiten Schnittstelle und dem Grundkörper zumindest eine Struktur mit einer geschlossenen Außenkontur angeordnet ist, welche Struktur einen Hohlraum begrenzt, welcher leer oder mit einem vibrationsdämpfenden Medium gefüllt ist. Vibrationsdämpfend ist dabei jedes Material in welchem der Körperschall stärker bedämpft wird als in dem Wandmaterials bzw. dem Massivmaterial des Vibrationsentkopplungselements. Das vibrationsdämpfende Material kann z.B. aus einem chemisch-identischen Material bestehen wie das über Laserschmelzen hergestellte Wandmaterial, wobei das vibrationsdämpfende Material jedoch in Pulverform vorliegt.

Das Vibrationsentkopplungselement, insbesondere die vorbeschriebene offene Struktur oder die Gesamtheit aus Verbindungselementen und/oder Strukturentkopplungselementen weist besonders vorteilhaft eine Rotationsasymmetrie, also keine Rotationssymmetrie, auf. Zweidimensionale Objekte sind rotationssymmetrisch, wenn eine Drehung um die Rotationsachse um jeden beliebigen Winkel das Objekt auf sich selbst abbildet. Dadurch wird eine weitere Verbesserung der Vibrationsentkopplung erreicht.

Wie zuvor beschrieben, kann das Vibrationsentkopplungselement ein spezielles Strukturelement enthalten, welches aufgrund seiner geometrischen Ausgestaltung eine starke Bedämpfung des Körperschalls bewirkt. In einer besonders bevorzugten Ausführungsvariante sind zwei oder mehr dieser Strukturelemente miteinander verbunden. Aufgrund der geometrischen Abmessungen des Strukturelements und der geringen Schnittstellenfläche kann eine zusätzliche Vibrationsdämpfung erreicht werden.

Zur Verhinderung von Ablagerungen auf dem Vibrationsentkopplungselement empfiehlt sich vorteilhaft ein Gehäuse um das Vibrationsentkopplungselement vorzusehen. Dieses kann ebenfalls aus einer vibrationsentkoppelnden Struktur, so z.B. einer Vielzahl miteinander zu einer Membran verbundenen Kugeln sein. Alternativ oder zusätzlich zum Gehäuse kann auch eine Blende vorgesehen sein, die lediglich mit dem Messrohr verbunden ist, jedoch keine Kontaktfläche mit dem Vibrationsentkopplungselement aufweist.

Zusätzlich zum vorgenannten Strukturelement kann das Vibrationsentkopplungselement eine Membran aufweisen, welche insbesondere zwischen der Schnittstelle des Vibrationsentkopplungselements mit dem Messrohr und der zweiten Schnittstelle für den Ultraschallwandler angeordnet ist und eine Verschmutzung verhindern soll.

In einer besonders vorteilhaften Ausgestaltungsvariante wird die vorgenannte Membran als Begrenzungsfläche eines Hohlraums genutzt, welcher zwischen dem Ultraschallwandler und einer mit dem Messrohr verbundenen Struktur angeordnet ist. Dieser Hohlraum kann mit einem vibrationsdämpfenden Material, z.B. mit Pulver aus dem Material aus welchem auch das Vibrationsentkopplungselement besteht, gefüllt sein.

Die Einkopplungsfläche ist im Fall der Verwendung in einem Ultraschall-Durchflussmessgerät vorzugsweise gegenüber der Längsachse des Vibrationsentkopplungselements angestellt bzw. gekippt. Die Längsachse des Vibrationsentkopplungselements kann vorzugsweise senkrecht zur Längsachse des Messrohres verlaufen. Die Einkopplungsfläche ist vorzugsweise im Winkel zwischen 20 bis 70° zu dieser Längsachse angestellt.

Die Neigung der Einkopplungsfläche kann über eine Kippung des Ultraschallwandlers gegenüber dem/der vibrationsentkoppelnden Strukturelement/e erreicht werden. Bei einer gewölbten Platte als Grundkörper können auch die Strukturelemente bereits mit dem entsprechenden Neigungswinkel an dem Grundkörper vorgesehen sein. Eine Kippung ist in diesem Fall nicht notwendig.

Bei der Verwendung der erfindungsgemäßen Anordnung in einem Tank zur Bestimmung der Füllstandshöhe ist eine Kippung nicht notwendig.

Die maximalen Auslenkungen der Einkopplungsfläche des Ultraschallwandlers im Sendebetrieb betragen etwa 200 bis 800 nm bei 100 V Sendespannung und 20 bis 80 nm bei 10 V Sendespannung. Die über die ganze Abstrahlfläche gemittelte Auslenkung beträgt ca. 100 bis 300 nm bei 100 V bzw. 10 bis 30 nm bei 10 V. Dies gilt für den üblichen Ultraschall-Arbeitsfrequenzbereich. Die Auslenkungen im Empfangsbetrieb bzw. sofern sich der Ultraschallwandler im Empfangsmodus befindet sind einige Größenordnungen kleiner. Die Auslenkungen der Körperschallwellen bei einer Anordnung ohne Vibrationsentkopplungselement sind allgemein auch deutlich kleiner als die Auslenkungen der jeweiligen Einkopplungsfläche. Aufgrund unterschiedlicher Faktoren sind die Auslenkungen der Körperschallwellen jedoch schwer quantifizierbar. Allgemein erfolgt durch das Vibrationsentkopplungselement eine Abschwächung bzw. Dämpfung des Körperschalls gegenüber den Randbereichen der Einkopplungsfläche des Ultraschallwandlers zumindest um das 20-fache. In den weit überwiegenden Fällen wird sogar eine Körperschalldämpfung um mehr als das 100-fache erreicht.

Zusammengefasst weist das erfindungsgemäße Vibrationsentkopplungselement oder dessen bevorzugte Ausführungsvarianten eine Reihe von Vorteilen auf. Einerseits gelingt die Herstellung einer Ultraschallwandler-Befestigung am Messrohr, welche die axialen und radialen Schwingungen des ins Medium einkoppelnden Schwingelements bzw. Ultraschallwandlers stark dämpft, sodass sie nicht als Körperschall störend im Empfangssignal in Erscheinung treten können.

Darüber hinaus kann die Anzahl der Bauteile für ein Vibrationsentkopplungselement auf ein Minimum, im besten Fall nur ein Bauteil, reduziert werden.

Zwar lässt sich das Bauteil auf unterschiedliche Weise realisieren, allerdings gelingt die Herstellung der vorbeschriebenen Ultraschallwandler-Befestigung am Messrohr mittels selektivem Laserschmelzen besonders gut, wobei dessen Werkstoffeigenschaften optimal an die jeweilige Anwendung angepasst sind, insbesondere die Korrosionsbeständigkeit. Es lassen sich zudem Vibrationsentkopplungselemente in vergleichsweise kurzer Zeit realisieren mit geometrischen Teilelementen, welche in die Gesamtstruktur des Vibrationsentkopplungselements integriert sind und welche einzeln für sich genommen eine Dämpfung des Körperschalls bzw. eine Vibrationsentkopplung zwischen Ultraschallwandler und Messrohr bewirken und welche zur Verbesserung dieser Entkopplung auch miteinander kombinierbar sind.

Das Vibrationsentkopplungselement kann sowohl dichtungslos als auch mit Dichtung an einem Sensorstutzen oder direkt am Messrohr befestigt werden.

Schließlich lässt sich die vorgenannt beschriebene vibrationsentkoppelnde Befestigung für Ultraschallwandler aller Art an beliebige Rohrformen (Rohre mit runden oder rechteckigem Querschnitt, Dreiecksquerschnitt, usw.) anpassen.

Nachfolgend wird die Erfindung im Detail anhand einiger Ausführungsbeispiele näher erläutert. Es zeigt:
- Fig. 1: schematische Darstellung eines Ultraschall-Durchflussmessgerätes;
- Fig. 2: seitliche Perspektivansicht einer ersten Ausführungsvariante einer Anordnung , gemäß einem nicht durch die beanspruchte Erfindung abgedeckten Beispiel;
- Fig. 3: Schnittansicht der Anordnung der Fig. 2;
- Fig. 4: Einbaulage der Anordnung der Fig. 2 in einem geschnittenen Messrohr;
- Fig. 5a: Modelldarstellung eines ersten definitionsgemäßen Strukturelements;
- Fig. 5b: Modelldarstellung eines zweiten definitionsgemäßen Strukturelements;
- Fig. 5c: Modelldarstellung eines dritten definitionsgemäßen Strukturelements;
- Fig. 6: seitliche Perspektivansicht einer zweiten Ausführungsvariante einer Anordnung, gemäß einem nicht durch die beanspruchte Erfindung abgedeckten Beispiel;
- Fig. 7: Schnittansicht der Anordnung der Fig. 6;
- Fig. 8: Einbaulage der Anordnung der Fig. 6 in einem geschnittenen Messrohr;
- Fig. 9: Einbaulage der Anordnung der Fig. 6 in einem geschnittenen Messrohr aus einer anderen Perspektive;
- Fig. 10: seitliche Perspektivansicht einer dritten Ausführungsvariante einer Anordnung, gemäß einem nicht durch die beanspruchte Erfindung abgedeckten Beispiel;
- Fig. 11: Schnittansicht der Anordnung der Fig. 10
- Fig. 12: Einbaulage der Anordnung der Fig. 10 in einem geschnittenen Messrohr;
- Fig. 13: seitliche Perspektivansicht einer vierten Ausführungsvariante einer erfindungsgemäßen Anordnung;
- Fig. 14 Schnittansicht: der Anordnung der Fig. 13;
- Fig. 15: seitliche Perspektivansicht der Anordnung der Fig. 13, mit einem Sensorbecher anstelle eines Resonators;
- Fig. 16 a-f: Anordnung der Fig. 13 und Fig. 14 ergänzt um eine Membran zum Schutz gegen Verschmutzungen;
- Fig. 17: Anordnung der Fig. 13 und Fig. 14 ergänzt um eine mehrheitlich aus Kugeln bestehenden Membran zum Schutz gegen Verschmutzungen
- Fig. 18: seitliche Perspektivansicht der Anordnung der Fig. 15, mit einem gerade stehenden Sensorbecher anstelle des gekippten Sensorbechers.

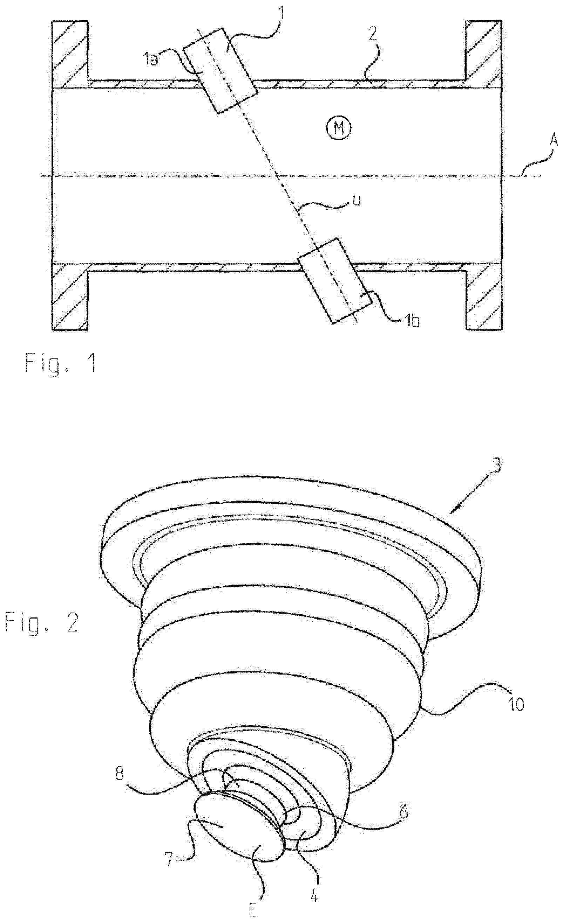

In Fig. 1 wird das allgemeine Messprinzip eines Ultraschall-Durchflussmessgerätes vorgestellt.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen. Die bekannten Ultraschall-Durchflussmessgeräte arbeiten häufig nach dem Laufzeitdifferenz Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die mittlere Fließgeschwindigkeit entlang des Ultraschallsignalpfades und damit bei bekanntem Strömungszustand und bekanntem Durchmesser des Rohrleitungsabschnitts der Volumendurchfluss bestimmen.

Die Ultraschallwellen werden mit Hilfe so genannter Ultraschallwandler 1 erzeugt bzw. empfangen. Hierfür sind Ultraschallwandler 1 in der Rohrwandung des betreffenden Rohrleitungsabschnitts fest angebracht. Zumeist ist der Rohrabschnitt integrale Einheit des Durchflussmessgerätes und wird als Messrohr 2 bezeichnet. Es sind auch Clamp-on-Ultraschall-Durchflussmesssysteme erhältlich. Die vorliegende Erfindung behandelt jedoch Ultraschall-Durchflussmessgeräte in welchen die Ultraschallwandler mediumsberührend mit einem mediumsführenden Messrohr verbunden sind.

Die Ultraschallwandler 1 weisen normalerweise ein elektromechanisches Wandlerelement, z.B. ein piezoelektrisches Element, auf. Weiterhin kann der Ultraschallwandler über eine Koppelschicht zur verbesserten akustischen Ankopplung und über eine Anpassungsschicht z.B. an gasförmige Medien verfügen.

Aus Gründen der Druckstabilität besteht das Messrohr 2 zumeist aus einem Metall, so z.B. aus Stahl. Bei der Erzeugung des einen Ultraschallsignals durch ein elektromechanisches Wandlerelement eines ersten Ultraschallwandlers 1a kann ein Teil des Ultraschallsignals auf das Messrohr 2 übertragen werden und sich als Körperschall auf ein elektromechanisches Wandlerelement eines zweiten Ultraschallwandlers 1b übertragen. Dieser detektiert dieses Körperschall-Signal zusätzlich zu dem eigentlichen durch das Messmedium M gegangene Ultraschall-Nutzsignal U, wodurch eine Störung der Messung auftritt. Daher sollte der Ultraschallwandler möglichst gut vom Messrohr körperschallentkoppelt sein.

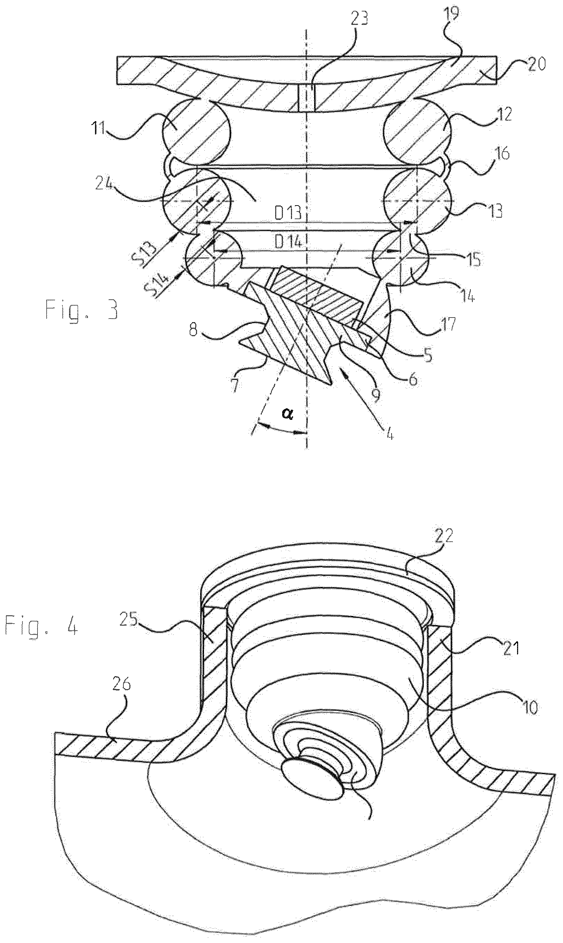

Die Fig. 2-4 zeigen eine erste Anordnung 3, gemäß einem nicht durch die beanspruchte Erfindung abgedeckten Beispiel, welche in einem Sensorstutzen 25 an einem Messrohr 26 angeordnet ist und welche einen Ultraschallwandler 4 aufweist. Der Ultraschallwandler 4 besteht im vorliegenden Fall aus einem Piezoelement 5 und einem metallischen Halteelement 6, in welchem das Piezoelement 5 angeordnet ist. Dieses Halteelement 6 weist eine Abstrahlplatte 7 mit einer Einkopplungsfläche E auf, von welcher aus das Ultraschallsignal an das Messmedium abgegeben wird. Diese Abstrahlplatte ist über einen Sockel 8 mit einem Körper 9 verbunden, welcher das Piezoelement 5 hält.

Das Halteelement 6 ist mit einem Vibrationsentkopplungselement 10 verbunden. Dieses Vibrationsentkopplungselement 10 weist eine spezielle vibrationsentkoppelnde Geometrie auf. Das Vibrationsentkopplungselement 10 der Fig. 2-4 weist mehrere Strukturelemente 11 auf, welche in diesem Ausführungsbeispiel teilweise als Schwingmassen ausgebildet sind. Diese Strukturelemente 11 sind Festkörper bzw. Massivelemente, welche jeweils eine oder mehrere Schnittstellen mit anderen Elementen des Vibrationsentkopplungselements 10 aufweisen. Die Dicke des Materials an der Schnittstelle(n) ist insbesondere mehr als zweimal kleiner als die Dicke des Festkörpers.

Das Vibrationsentkopplungselement ist vorzugsweise monolithisch aufgebaut und weist in Fig. 2-4 drei miteinander-verbundene Tori 12-14 auf. Zudem ist eine Aufnahme 17 mit einer Schnittstelle vorgesehen an welcher das Halteelement 6 des Ultraschallwandlers angeordnet ist. Dabei ist die Schnittstelle zur Halterung des Ultraschallwandlers derart ausgerichtet, dass das Ultraschallsignal von dem in der Aufnahme 17 angeordneten Halteelement 6 in einem Winkel ungleich 90° zur Messrohrachse A, insbesondere in einem Winkel α zwischen 20-40° zu einer Senkrechten T der Messrohrachse A, eingestrahlt wird.

Ein jeder Torus 12, 13 oder 14 ist mit zumindest einem angrenzenden Torus durch einen direkten Flächenkontakt 15 oder durch eine Membran 16 verbunden. Die Ringstärken S der Tori 12-14 können gleich groß oder unterschiedlich groß ausgebildet sein. Gleiches gilt für die Durchmesser D der Tori 12-14. Konkret weist in Fig. 2-4 der Torus 14, welcher an die Aufnahme 17 mit der Schnittstelle zur Halterung des Ultraschallwandlers angrenzt, eine geringere Ringstärke S₁₄ auf als die Ringstärken S₁₂ und S₁₃ der Tori 12 und 13. Auch der Durchmesser D₁₄ des Torus 14 ist geringer als die Durchmesser D₁₂ und D₁₃ der Tori 12 und 13. Die Ringstärken und Durchmesser der Tori 12 und 13 sind hingegen gleich groß.

Besonders von Vorteil ist es, gemäß einem nicht durch die beanspruchte Erfindung abgedeckten Beispiel, wenn das Vibrationsentkopplungselement 10 zudem eine Membran 16 als strukturelles Element aufweist. Diese Membran 16 soll bei geringen Druckunterschieden zwischen dem Innenraum 24 und der Umgebung der Anordnung auslenkbar sein. Eine entsprechende Membran ist z.B. in Fig. 2-4 zwischen den Tori 12 und 13 angeordnet. Sie schließt den Innenraum der Anordnung von der Umgebung ab, und sorgt bei niedrigen Druckunterschieden aufgrund ihrer sehr geringen Querschnittsfläche für eine weitestgehende akustische Entkopplung zwischen Torus 12 und 13. Übersteigt der Außendruck den Innenraumdruck deutlich, so wird Torus 13 gegen Torus 12 gepresst. Hierdurch entsteht ein linienartiger Festkörperkontakt, der aufgrund seiner sehr kleinen Auflagefläche ebenfalls für eine gute Körperschallentkopplung sorgt.

Der Torus 12 ist durch einen Flächenkontakt mit einer Schlussplatte bzw. einem plattenförmigen Grundkörper 19 verbunden. Diese Schlussplatte weist einen flanschartige Ausformung 20 auf. Diese flanschartige Ausformung 20 dient der Auflage auf oder an einem Sensorstutzenflansch 21.

Die flanschartige Ausformung 20 kann zudem eine Dichtung 22 aufweisen, welche an dem Vibrationsentkopplungselement 10 angeordnet ist und im montierten Zustand auf dem Sensorstutzenflansch 21 aufliegt. Die Schlussplatte 19 weist zudem ein Loch 23 auf zur Durchführung elektrischer Anschlüsse und Signalkabel zu dem Ultraschallwandler 1 bzw. zum Piezoelement 5.

Wie in Fig. 2-4 ersichtlich handelt es sich bei dem dargestellten Vibrationsentkopplungselement 10 um eine Struktur mit den drei Strukturelementen 11 mit einer geschlossenen Außenkontur. Innerhalb des Vibrationsentkopplungselements befindet sich ein Hohlraum 24, welcher mit einem vibrationsdämpfenden Medium (z.B. Verguss oder Metallpulver) gefüllt ist oder ungefüllt ist. Durch die geometrische Gesamtheit des Vibrationsentkopplungskörpers und durch die torischen Schwingelemente 12-14 im Speziellen wird eine deutliche Verminderung oder eine gänzliche Auslöschung des Körperschalls erreicht. Damit kann das Piezoelement US- Signale an das Medium abgeben, ohne dass ein Körperschallsignal über das Messrohr an den Empfänger übertragen wird. Bei der Durchflussmessung von Fluiden, und insbesondere bei der Durchflussmessung von Gasen ist daher die vibrationsentkoppelte Lagerung von Ultraschallwandlern besonders vorteilhaft.

Die in Fig. 2-4 dargestellte Geometrie ist nur eine von einer Vielzahl an Möglichkeiten für einen speziellen geometrischen Aufbau eines Vibrationsentkopplungselements, welches zwischen dem eigentlichen Ultraschallwander und dem Messrohrstutzen angeordnet ist.

Nachfolgend werden weitere Aufbauten für Vibrationsentkopplungselemente vorgestellt.

In neuerer Zeit ist die Methode des selektiven Laserschmelzens entwickelt worden, mit welcher derartige Vibrationsentkopplungselemente herstellbar sind. Auch andere, gegenüber dem SLS abgewandelte Verfahren können genutzt werden, bei welchen z.B. kein Laser zum Materialaufbau eingesetzt wird. Diese Methoden können zur Herstellung von Vibrationsentkopplungskörpern mit den in Fig. 2-4 und den nachfolgend beschriebene geometrische Abmessungen genutzt werden. Selektives Laserschmelzen (engl. selective laser melting) ist dem Fachmann als Herstellungsmethode bekannt. Diese Methode kann nunmehr eingesetzt werden, um Vibrationsentkopplungskörper mit komplizierten Geometrieelementen herzustellen. Körper, welche durch Laserschmelzen realisiert wurden, weisen aufgrund des schichtweisen Aufbaus eine höhere Oberflächenrauhigkeit als herkömmlich hergestellte Teile, die beispielsweise gegossen und anschließend spanabhebend bearbeitet wurden. Zwar kann diese erhöhte Oberflächenrauhigkeit durch Nachverarbeitungsverfahren (z.B. Schleifen, Strahlen oder Polieren) gemindert werden, trotzdem wird aufgrund der komplexen und teilweise hinterschnittenen Geometrien innerhalb des Vibrationsentkopplungskörpers eine entsprechend erhöhte Oberflächenrauhigkeit an einzelnen Geometrieelementen aufzufinden sein.

Durch Herstellung mittels selektivem Laserschmelzen kann zudem das Halteelement 6 als ein integraler Bestandteil des vorzugsweise monolithisch-ausgebildeten

Vibrationsentkopplungselements ausgebildet werden. Es können jedoch auch mehrere unterschiedliche Materialien miteinander verbunden werden. So kann z.B. das Halteelement aus Titan und das Vibrationsentkopplungselement aus einem anderen Metall gefertigt werden. Der Materialübergang zwischen den Materialien kann, anders als beim konventionellen Schweißen oder Löten, nahtlos bzw. verbindungsnaht- oder schweißnahtlos ausgebildet sein. Es ist allerdings auch möglich einzelne Teilsegmente zu fertigen und diese anderweitig miteinander zu verbinden, z.B. durch Verkleben, Bördeln oder Verschrauben. Dadurch umgeht man z.B. schwer schweißbare Stellen.

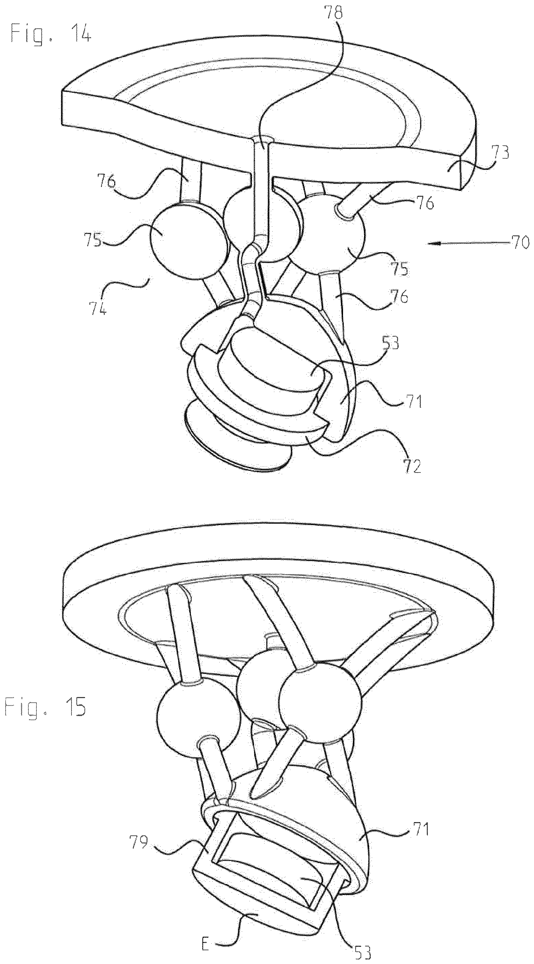

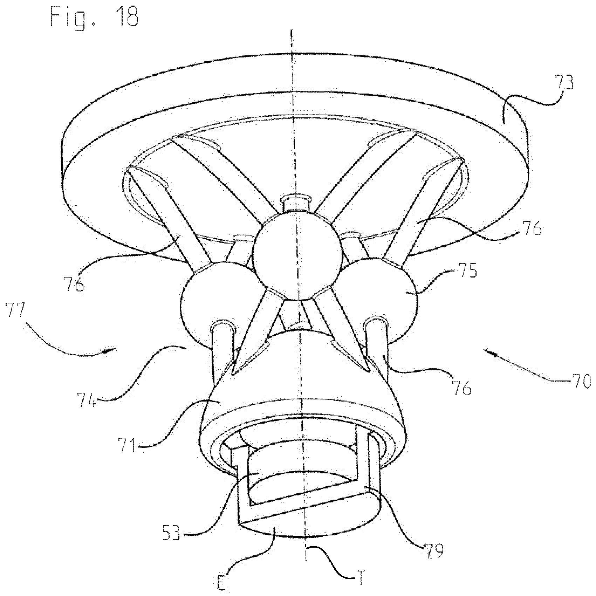

Das Halteelement 6 kann auch als Becher mit einer rohrförmigen Mantelfläche und einer endständigen planaren Abstrahlfläche ausgebildet sein. In diesem Becher ist das Piezoelement angeordnet. Die Mantelfläche ist mit dem Vibrationsentkopplungselement 10 verbunden. Diese Variante wird in Fig. 15 und 18 dargestellt.

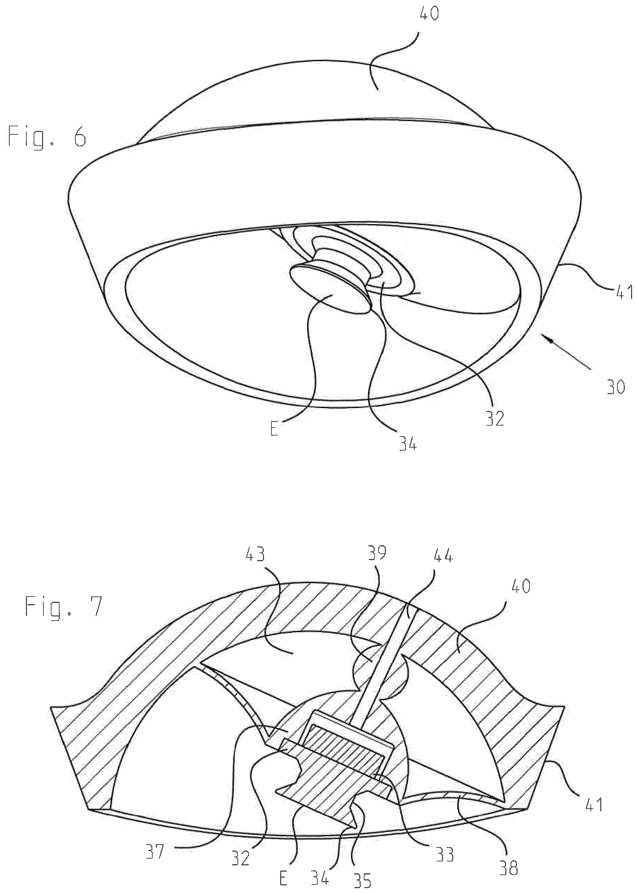

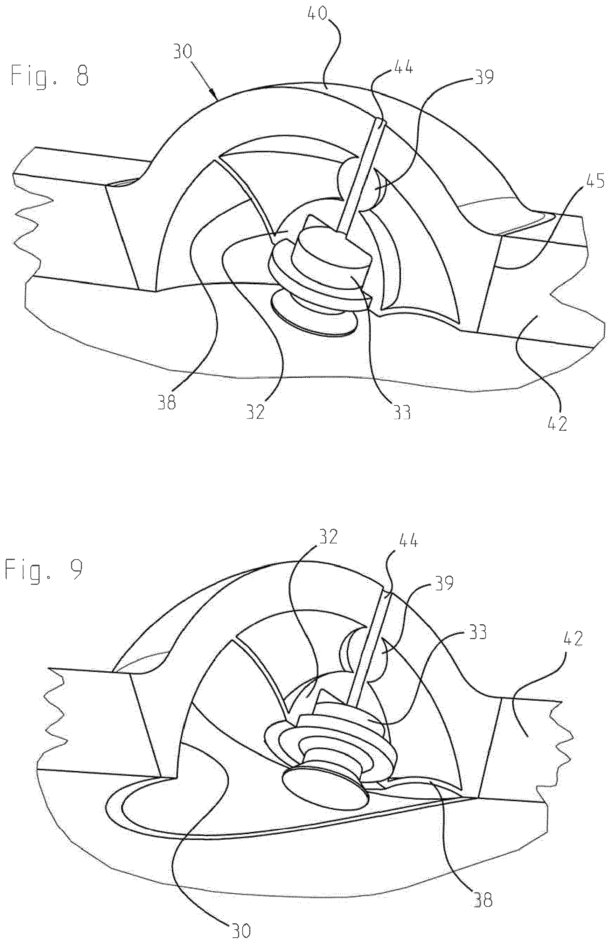

Fig. 6-9 zeigt eine weitere Variante einer Anordnung 46, gemäß einem nicht durch die beanspruchte Erfindung abgedeckten Beispiel, mit einem Vibrationsentkopplungselement 30. Die Anordnung 46 ist in einer Öffnung 45 eines Messrohres 42 angeordnet. Diese Anordnung weist zudem einen Ultraschallwandler 31 mit einem Halteelement 32 zur Aufnahme und Halterung eines Piezoelements und einem Piezoelement 33 auf. Das Halteelement 32 weist eine Abstrahlplatte 34 auf, welche analog zu Fig 2-4 durch einen Sockel 35 vom Grundkörper 36 beabstandet ist. Auch in dieser Ausführungsvariante kann das Halteelement 32 anders ausgebildet sein, so z.B. in einer becherartigen Ausführung 79, wie sie in Fig. 15 gezeigt ist. In dem becherartigen Halteelement 79 ist das Piezoelement 53 angeordnet. Das Halteelement 32 des Ultraschallwandlers ist in einer Aufnahme 37 bzw. in einer Fassung mit einer Schnittstelle zur Halterung des Ultraschallwandlers befestigt, welche Teil des Vibrationsentkopplungselements 30 ist. Diese Aufnahme 37 bzw. Fassung ist vibrationsentkoppelnd gelagert. Hierfür ist die Aufnahme 37 durch eine Membran 38 und durch ein Strukturelement 39 von einem kuppelförmigen Grundkörper 40 beabstandet. Das Strukturelement 39 weist dabei die Form einer Kugel auf. Alternativ kann das Strukturelement auch als Ellipsoid oder vielflächig-polyederförmig ausgestaltet sein.

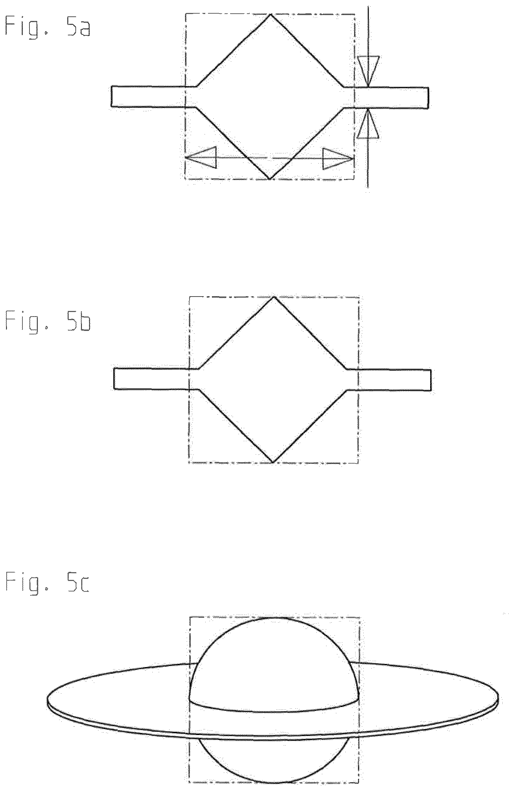

Bei den geometrischen Abmessungen des Strukturelements 39 kann es sich, in Analogie zu Fig. 5, um einen Festkörper handeln, der eine oder mehrere Schnittstellen mit anderen Elementen des Vibrationsentkopplungskörpers aufweist, wobei die Dicke des Materials an der Schnittstelle(n) insbesondere mehr als zweimal kleiner als die Dicke des Festkörpers ist.

In dem in Fig. 6-9 dargestellten Ausführungsbeispiel ist das Strukturelement 39 durch Flächenkontakt mit dem kuppelförmigen Grundkörper 40 und mit der Aufnahme 37 verbunden. Randseitig ist an der Aufnahme 37 die Membran 38 angeordnet, welche sich radial von der Aufnahme 37 bis zu dem kuppelförmigen Grundkörper 40 erstreckt. Die Membran 38 sorgt aufgrund ihrer sehr geringen Querschnittsfläche für eine gute akustische Entkopplung zwischen Aufnahme 37 und kuppelförmigem Grundkörper 40.

Der kuppelförmige Grundkörper 40 dient der Verankerung des Vibrationsentkopplungselements am Messrohr. Der Grundkörper wird durch einen konischen Seitenrand 41 begrenzt. Dieser dient zum Einsetzen des Vibrationsentkopplungselements 30 in eine entsprechende Öffnung in einem Messrohres 42. Ein ausgeformter Messrohrstutzen wie bei der vorhergehenden Variante ist hierbei nicht erforderlich. Die Membran und der kuppelförmige Grundkörper 40 begrenzen einen Hohlraum 43. Dieser kann entweder mit einem speziell vibrationsdämpfenden Medium, z.B. Metallpulver oder mit einem Gas gefüllt sein.

Das Öffnung innerhalb des Messrohres soll vorteilhafterweise zum Einsetzen des Vibrationsentkopplungselements mit dem Grundkörpers 40 ebenfalls konisch ausgestaltet sein. Die Verbindung zwischen Messrohr und Vibrationsentkopplungselement kann in diesem speziellen Ausführungsbeispiel vorzugsweise mittels eines Laser- oder Elektronenstrahlschweißen erfolgen. Bei letzterem Verfahren empfiehlt es sich die Schnittstelle nicht mit konischen sondern senkrechten Wände auszugestalten, weil sich der Elektronenstrahl gegenüber dem Bauteil nicht verkippen lässt. Allerdings kann das Werkstück auch durch einen Roboterarm gekippt geführt werden. Bei jeder Art der Schweißung ist zu beachten, dass die eingebrachte Wärmemenge so gering als möglich ist, um eine Beschädigung der Piezokeramiken durch Annäherung der Curie-Temperatur zu vermeiden.

Durch den kuppelförmigen Grundkörper 40, durch das Strukturelement 39 und durch die Aufnahme 37 verläuft ein Kanal 44. Innerhalb dieses Kanals 44 kann ein Stromversorgungskabel und/oder ein Signalübertragungskabel angeordnet sein, welches mit dem Piezoelement 33 verbunden ist.

Auch das in Fig. 7-9 dargestellte Vibrationsentkopplungselement 30 ist vorzugsweise monolithisch aufgebaut. Auch das Halteelement 32 kann zusammen mit dem Vibrationsentkopplungselement eine monolithische Einheit bilden. Der monolithische Aufbau ist jedoch nicht zwingend vorgeschrieben, sondern einzelne Elemente des Vibrationsentkopplungselements können auch durch Kleben, Schweißen, Löten oder in sonstiger Weise miteinander verbunden sein.

Auch dieses Vibrationsentkopplungselement ist durch selektives Laserschmelzen herstellbar.

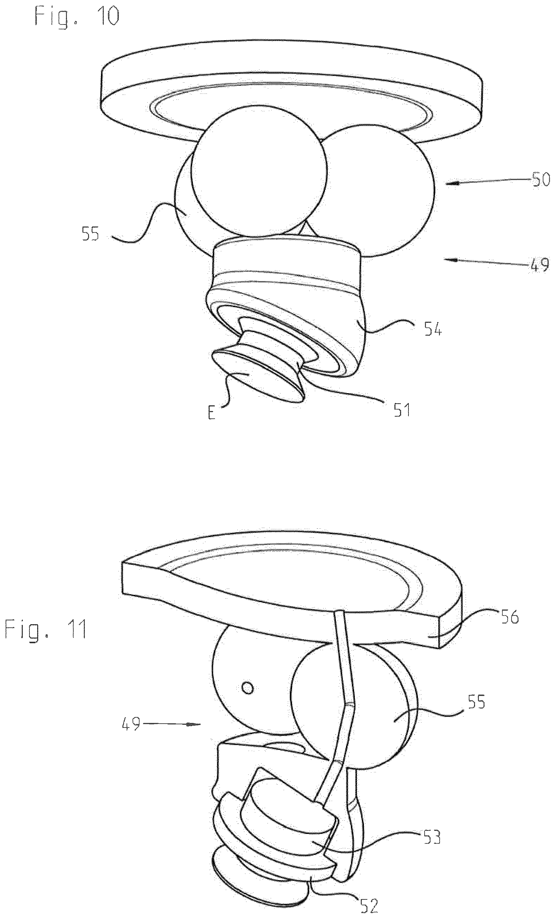

Fig. 10-12 zeigt eine weitere Anordnung 49, gemäß einem nicht durch die beanspruchte Erfindung abgedeckten Beispiel, mit einem Vibrationsentkopplungselements 50, welche in einem Sensorstutzen 58 an einem Messrohr 59 angeordnet ist. Ein Ultraschallwandler 51 mit einem Halteelement 52 und einem Piezoelement 53 ist analog wie in Fig. 2-4 und 7-9 aufgebaut. Der Ultraschallwandler 51 ist in einer Aufnahme 54 bzw. einer Fassung mit einer Schnittstelle zur Halterung bzw. Festlegung des Ultraschallwandlers angeordnet. Die Halterung kann z.B. durch Verkleben, Verlöten oder Verschweißen zwischen dem Ultraschallwandler und der Schnittstelle der Aufnahme 54 geschaffen werden. Es sind allerdings beliebige andere Möglichkeiten der Halterung bzw. Festlegung bekannt. Diese gibt aufgrund ihrer Ausrichtung einen bestimmten Winkel vor, mit welchem ein Ultraschallsignal in das Messrohr eingeleitet wird. Die Aufnahme 54 ist auf drei Strukturelementen 55 angeordnet, welche, wie die Strukturelemente der Fig. 2-4 und 7-9, fest mit der Aufnahme 54 verbunden sind. Die Strukturelemente 55 sind, ebenfalls wie in Fig. 2-4 und 7-9, fest mit einem Grundkörper 56, welcher vorliegend als plattenförmiger Grundkörper ausgebildet ist, verbunden. Der Grundkörper kann allerdings auch andere Ausgestaltungen haben.

Die Strukturelemente 55 sind in ihren geometrischen Abmessungen analog zum Strukturelement 39 der Fig. 7-9 zu verstehen. Im konkreten Fall der Fig. 10-12 handelt es sich um kugelförmige Strukturelemente. Es können jedoch auch ellipsoide Elemente sein oder vielflächig polyederförmige Elemente sein, welche durch Flächenkontakt mit der Aufnahme 54 und dem Grundkörper 56 verbunden sind. Der Grundkörper 56 ist plattenförmig ausgebildet mit einer zentralen Wölbung. In den Randbereichen des Grundkörpers ist eine Dichtung 57 angeordnet, welche im montierten Zustand zwischen dem Grundkörper 56 und einem Sensorstutzen 58 angeordnet ist. Der dargestellte Grundkörper 56 ist nur ein Beispiel einer Reihe weitere Ausführungsvarianten für die Ausgestaltung dieses Elements des Vibrationsentkopplungselements 50. So kann auch bei diesem Beispiel der Grundkörper kuppelförmig, analog zu Fig. 7-9, ausgebildet sein. In diesem Fall bedarf es zum Anschluss des Vibrationsentkopplungselements keines Sensorstutzens 58 sondern lediglich einer entsprechenden Öffnung im Messrohr 59.

Die Strukturelemente 55 sind ebenfalls durch Flächenkontakt miteinander verbunden. Weiterhin weist ein Strukturelement 55, sowie der Grundkörper 56 und die Aufnahme 54 einen Kanal auf für ein Strom- und/oder ein Signalkabel. Die Struktur des Vibrationsentkopplungselements 50 ist eine offene Struktur. Das heißt, dass zwischen den einzelnen Elementen, so u.a. auch zwischen den einzelnen Strukturelementen des Vibrationsentkopplungselements 50 Freiräume vorhanden sind. Somit wird anders als bei den vorhergehenden Vibrationsentkopplungselementen kein geschlossener Hohlraum geschaffen, sondern die besagte offene Struktur. Die offene Struktur ermöglicht eine besonders bevorzugte Vibrationsentkopplung bzw. Körperschallentkopplung, da Schwingungen nur über eine sehr geringe Fläche übertragen werden.

Um einer Verschmutzung vorzubeugen kann die offene Struktur mit einer Membran, so z.B. einer Blende, einem dünnen Prallblech oder mit einem dünnen Mantelblech umgeben sein, welches z.B. zylindrisch oder konisch ausgebildet ist. Es kann beispielsweise am Grundkörper 56, zwischen Grundkörper 56 und Messrohrstutzen 58, am Messrohrstutzen 58 oder am Messrohr 59 angeordnet sein.

Bei einer offenen Struktur ohne eine solche Membran kann wiederum über eine Auswertung des SNR-Verhältnisses gegenüber einem Sollwert eine Verschmutzungsdiagnose erfolgen, in wie weit die offene Struktur Verschmutzungsablagerungen und dergleichen aufweist.

Auch dieses Vibrationsentkopplungselement 50 kann durch selektives Laserschmelzen hergestellt werden.

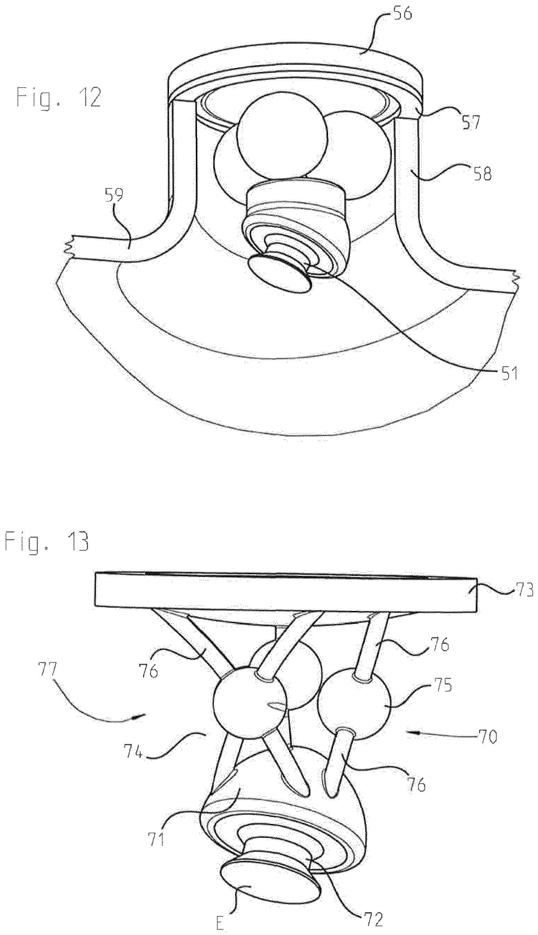

Fig. 13-14 zeigt ein weiteres Ausführungsbeispiel für eine erfindungsgemäße Anordnung 77 mit einem Vibrationsentkopplungselement 70 zur Anordnung in einem Sensorstutzen, der analog zum Sensorstutzen 58 ausgestaltet sein kann. Hierbei wird die Vibrationsentkopplung dadurch erreicht, dass zwischen der Aufnahme 71 mit einer Schnittstelle zur Halterung des Ultraschallwandlers 72 und dem plattenförmigen Grundkörper 73 eine offene Struktur 74 angeordnet ist. Diese offene Struktur 74 besteht aus einzelnen kugelförmigen Strukturelementen und Streben bzw. stabförmige Verbindungselemente 76. Zwischen diesen Elementen befindet sich ein Freiraum. Es ist ein Strukturelement in Form eines Schwingkörpers 75 vorgesehen, welcher über die stabförmigen Verbindungselemente 76 mit der Aufnahme 71 und dem Grundkörper 73 verbunden ist. Man erkennt, dass die Streben gebogen sind. Durch die Biegungen der stabförmigen Verbindungselemente 76 werden Vibrationen zusätzlich gedämpft. Die akustischen Vibrationen werden durch Stauchung, Streckung, Biegung und Torsion der gebogenen stabförmigen Verbindungselemente 76 aufgenommen.

Weiterhin sind drei Schwingkörper 75 vorgesehen. Die Schwingkörper 75 sind Strukturelemente des Vibrationsentkopplungselements 70 und analog zu den Strukturelementen 11 und 29 dimensioniert. Somit sind die Schwingkörper 75 der Fig. 13 und 14 Festkörper bzw. Massivelemente, welche jeweils eine oder mehrere Schnittstellen mit anderen Elementen des Vibrationsentkopplungselements 10 aufweisen. Der kleinste Querschnitt bzw. die kleinste Dimension dieser Schnittstelle(n) kann vorzugweise mehr als zweimal kleiner ausfallen als der kleinste Querschnitt bzw. die kleinste Dimension eines imaginären Quaders, der allseitig begrenzend um das jeweilige Strukturelement gelegt wird. Die Dicke des Materials an der Schnittstelle(n) ist insbesondere mehr als zweimal kleiner als die Dicke des Festkörpers bzw. der kleinste Abstand vom Schwerpunkt des Festkörpers zu seiner Außenkontur. Zur besseren Darstellung der Dimensionierung der Strukturelemente 11 kann die gegenständliche Darstellung der Fig. 5a-c herangezogen werden.

Die Schwingkörper 75 sind in Fig. 13 und 14 kugelförmig ausgestaltet. Sie können allerdings auch ellipsoid oder vielflächig-polyederförmig ausgestaltet sein oder als einzelner umlaufender Torus. Zudem kann der Schwingkörper 75 im Betrieb des Ultraschallwandlers entlang einer geraden Verbindungslinie zwischen der Aufnahme 71 und dem Grundkörper 73 sowohl in Längsrichtung, also parallel zur der Verbindungslinie, als auch in Querrichtung, also nicht-parallel zu der Verbindungslinie schwingen, wodurch eine Vibrationsdämpfung verschiedener unterschiedlicher Schwingungsmoden erfolgt. In diesem Element ist zudem ein Kanal 78 zur Führung eines Signal- und/oder Stromkabels vorgesehen. Dieser verläuft durch die stabförmigen Verbindungselemente 76 und den Schwingkörper 75 und erstreckt sich vom Grundkörper 73 bis zur Aufnahme 71.

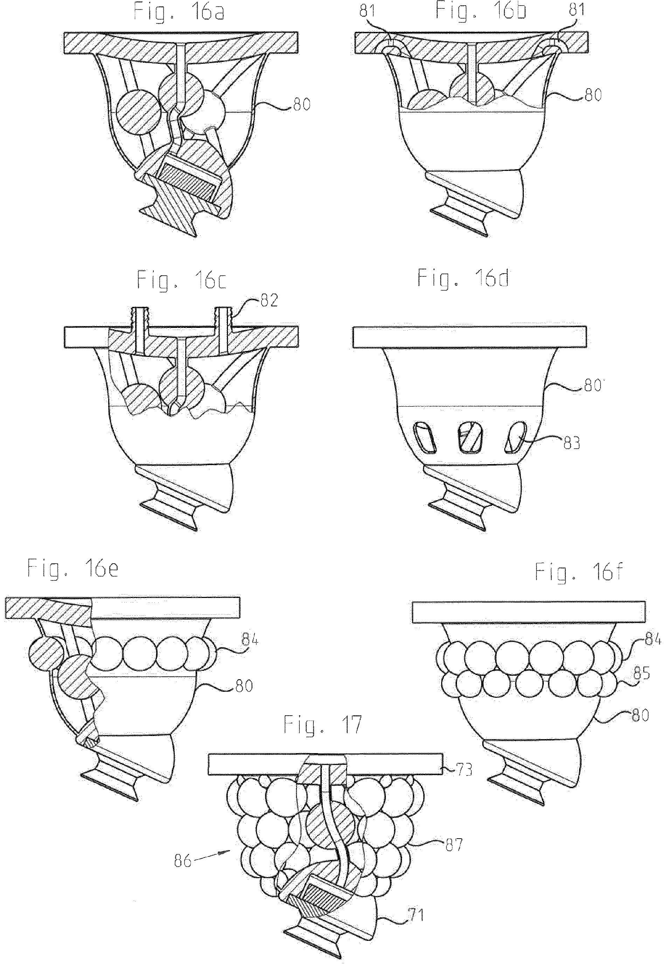

Wie schon beim Ausführungsbeispiel der Fig. 7-9 können auch die offenen Strukturen der Fig. 13-14 und allgemein alle weiteren Varianten von offenen Strukturen durch eine zusätzliche Blende oder durch ein zusätzliches Gehäuse vor Verschmutzung geschützt werden. Dabei empfiehlt sich u.a. auch eine dünnwandige Membran, wie sie in Fig. 16a-f dargestellt ist.

Fig. 16a zeigt eine dünnwandige Membran 80, in Form eines Flächengebildes mit im Wesentlichen gleichmäßiger Wandstärke, welche das Eindringen von Partikeln in die offene Struktur 74 verhindert. Die Membran 80 kann eine bevorzugte Wandstärke von weniger als 2 mm aufweisen und kann vorzugsweise aus Kunststoff oder besonders bevorzugt aus Metall bestehen. Sie verbindet die Grundplatte 73 mit der Aufnahme 71.

Die offene Struktur 74 ist als eine Stützstruktur ausgebildet und kann funktional verstanden werden. Die Bestandteile der offenen Struktur übernehmen im Wesentlichen die Stützfunktion des Ultraschallwandlers. Dabei bildet die Gesamtheit der stützenden Bestandteile, also z.B. nur die Strukturelemente 55 wie in Fig. 10-12 oder die Strukturelemente 75 mit den Verbindungselementen 76 wie in Fig. 13-15, keinen Hohlraum aus. Die offene Stützstruktur definiert somit keinen geschlossenen Hohlraum. Eine vor Verschmutzung schützende Membran gehört dabei nicht zur offenen Stützstruktur. Es ist keine Druckdifferenz zwischen einem Medium außerhalb und innerhalb der offenen Struktur vorhanden.

Sofern die offene Struktur von einer Hohlmembran umgeben ist können die Zwischenräume der offenen Struktur mit einem anderen Material gefüllt sein. Dieses Material kann schalldämpfendes Vergussmaterial sein oder ganz besonders bevorzugt ein Metallpulver bzw. Metallstaub. Auch wenngleich die offene Struktur bei dieser Variante gefüllt ist, so ist sie trotzdem definitionsgemäß als offene Struktur zu verstehen. Im Gegensatz dazu steht ein Freiraum in Form eines Hohlraumes, wie in Fig. 2-4 dargestellt, welcher von Struktur- und Verbindungselementen voll umschlossen wird. Eine solche Struktur ist nicht als offene Struktur zu verstehen.

Obwohl die Membran 80 somit einen Hohlraum definiert, ist die offene Struktur weiterhin erhalten.

Fig. 16b ist eine Weiterentwicklung zu Fig. 16a. Dabei sind in der Grundplatte 73 zwei Kanäle 81 angeordnet welche den Messrohrinnenraum mit dem durch die Membran 80 gebildeten Hohlraum verbinden. Dies dient dem Druckausgleich. In einer besonders bevorzugten nichtdargestellen Ausführungsvariante kann sich an/in den Löchern ein Balg oder ein Filter befindet; um den vorgenannten Hohlraum vor Verschmutzung und auch vor Verstopfung zu schützen.

Fig. 16c ist ebenfalls eine Weiterentwicklung von Fig. 16a. Hierbei weist die Grundplatte 73 zwei Stutzen 82 auf mit geraden Kanälen, welche sich von der Unterseite der Grundplatte bis zum Rand des Stutzens erstrecken. Diese sind zur Befüllung oder auch Entleerung des durch die Membran gebildeten Hohlraums, z.B. mit Metallpulver. Gleichzeitig könnten sie auch eine Montagehilfe sein, beispielsweise um eine kleine Leiterplatte zu montieren.

In der Weiterentwicklung gemäß Fig. 16d befinden sich Aussparungen 83 in der Membran 80, so dass das Messmedium M in den durch die Membran definierten Hohlraum mit der darin angeordneten offenen Struktur 74 eintreten kann. Anzahl, Form und Größe der Aussparungen 83 sind variabel. Diese Aussparungen können z.B. auch einiges kleiner und an der Anzahl auch weniger sein. Sie dienen auch dem Druckausgleich und die Membran als Schmutzschutz der Entkopplungselemente bzw. der offenen Struktur.

Wie schon zuvor erwähnt, haben sich weitestgehend kugel-, ellipsen-, torus- und/oder vielflächig-polyederförmige Strukturelemente als besonders geeignet zur Schallentkopplung erwiesen. In Fig. 16e:ist eine Weiterentwicklungsvariante der Membran 80 mit einem Kugelring 84, also eine einreihige Anordnung aus nebeneinander geordneten Kugeln dargestellt. Die Kugeln können miteinander verbunden sein. Dies ist jedoch nicht zwingend notwendig. Ebenfalls denkbar, jedoch weniger bevorzugt ist ein Ring aus Ellipsoiden oder ein Torus.

Fig. 16f zeigt eine Weiterentwicklung der Fig. 16e mit einem zweiten Kugelring 85. Dieser weist bevorzugt eine Größenvarianz der Kugelradien gegenüber dem ersten Kugelring 84 auf. Die Kugelringe 84, 85 können miteinander verbunden sein, z.B. mittels dünner Membranzwischenstücke. Dies ist jedoch nicht zwingend notwendig.

Fig. 17 zeigt eine Weiterentwicklung der Fig. 16f, bei der die gesamte Schutzmembran/ Schutzgehäuse im Wesentlichen aus aneinander gereihten Kugeln besteht. Diese weisen bevorzugt eine Größenvarianz der Kugelradien auf. Die Kugelringe können miteinander verbunden sein, z.B. mittels dünner Membranzwischenstücke. Dies ist jedoch nicht zwingend notwendig. Der Innenraum wird weiterhin aus der in Fig. 16a dargestellten offenen Struktur gebildet, die aus verschiedenen Vibrationsentkopplungs- und Verbindungselementen besteht. In eines dieser Elemente ist wiederum ein Kabelkanal integriert, der zur Führung eines Signal- und/oder Stromkabels dient. Da in diesem Spezialfall alle Kugeln aneinander angrenzen und sich gegenseitig abstützen wäre es denkbar, die mittigen offenen Strukturen wegzulassen.

Fig. 18 zeigt ein weiteres Ausführungsbeispiel einer erfindungsgemäßen Anordnung in Analogie zu Fig. 15. Einziger Unterschied ist, dass bei der Variante der Fig. 15 die Aufnahme und der Ultraschallwandler gekippt dargestellt sind, während in Fig. 18 die Rotationsachse der Aufnahme und der Ultraschallwandler parallel zur Längsachse des Vibrationsentkopplungssystems ausgerichtet sind. Dadurch wird ein gerades Abstrahlen des Ultraschallsignals ins Behältnis ermöglicht, was z.B. bei der Ermittlung des Füllstandes besonders von Vorteil ist.

Die Vibrationsentkopplungselemente der Fig. 13-14 sind ebenfalls durch selektives Laserschmelzen herstellbar. Zusätzlich können auf diese Weise auch die in Fig. 16 dargestellte Membranen hergestellt werden.

Die Abmessungen der in Fig. 1-4 und 6-18 dargestellten Ausführungsbeispiele gelten exemplarisch für Wandler mit 200 kHz Primärschwingungsfrequenz und Piezoabmessungen: d = 5 mm, h = 1.5 mm.

In den Fig. 1-4 und 6-17 sind ausschließlich Vibrationsentkopplungselemente dargestellt, die eine Schrägstellung der Ultraschallwandler-Einheit vorsehen, sogenannte gekröpfte Transducer. Selbstverständlich lassen sich mit dem beschriebenen Verfahren auch Geometrien realisieren, bei denen der Ultraschallwandler genau senkrecht zur Befestigung am Stutzen angebracht ist, und bei denen die Schrägstellung des Ultraschall-Messpfades durch Kippung der Messrohrstutzen erzielt wird.

### Bezugszeichen

- 1, 4, 31, 51, 72: Ultraschallwandler
- 2, 26, 42, 59: Messrohr
- 3, 46, 49, 77: Anordnung
- 5, 33, 53: Piezoelement
- 6, 32, 52: Halteelement
- 7, 34: Abstrahlplatte
- 8, 35: Sockel
- 9, 36: Grundkörper
- 10, 30, 50, 70: Vibrationsentkopplungselement
- 11, 39, 55: Strukturelement
- 12, 13, 14: Torus
- 15: Flächenkontakt
- 16: Membran
- 17,37,54,71: Aufnahme
- 19, 56, 73: plattenförmiger Grundkörper
- 20: flanschartige Ausformung
- 21: Sensorstutzenflansch
- 22: Dichtung
- 23: Kabelanschlussöffnung
- 24: Hohlraum
- 25, 58: Sensorstutzen
- 38: Membran
- 40: kuppelförmiger Grundkörper
- 41: konischer Seitenrand
- 43: Hohlraum
- 44, 78: Kanal
- 45: Messrohrwandöffnung
- 57: Dichtung
- 74: offene Struktur
- 76: stabförmige Verbindungselemente
- 75: Schwingkörper bzw. Strukturelement
- 79: becherartiges Halteelement
- 80: Membran
- 81, 82: Lochkanal
- 83: Aussparungen
- 84, 85: Kugelring
- 86: Kugelmembran
- α: Winkel
- T: Senkrechte
- A: Messrohrachse
- S: Ringstärke
- D: Durchmesser
- U: Ultraschall-Nutzsignal
- M: Messmedium
- E: Einkopplungsfläche

## Patentansprüche

1. Anordnung zum Aussenden und/oder Empfangen eines Ultraschall-Nutzsignals (U) in ein Messmedium (M) umfassend mindestens einen Ultraschallwandler und ein Vibrationsentkopplungselement (10, 30, 50, 70) zum Festlegen mindestens eines Ultraschallwandlers (4, 31, 51, 72) in einem Behältnis, wobei das Vibrationsentkopplungselement (10, 30, 50, 70) oder der Ultraschallwandler (4, 31, 51, 72) dazu eingerichtet ist, über eine Einkopplungsfläche (E) Ultraschall-Nutzsignale (U) an ein Messmedium (M) abzugeben und wobei das Vibrationsentkopplungselement (10, 30, 50, 70) eine erste Schnittstelle aufweist, an welcher das Vibrationsentkopplungselement (10, 30, 50, 70) an das Behältnis, oder an einen am Behältnis angebrachten Sensorstutzen (25, 58) anschließbar ist, welches Behältnis teilweise oder vollständig mit Messmedium (M) füllbar ist,
wobei das Vibrationsentkopplungselement (10, 30, 50, 70) einen Grundkörper (19, 40, 56, 73) zur Festlegung des Vibrationsentkopplungselements (10, 30, 50, 70) an dem Sensorstutzen (58) oder dem Behältnis aufweist und eine zweite Schnittstelle (17, 37, 54, 71) zur Festlegung des Ultraschallwandlers (4, 31, 51, 72) aufweist, wobei zwischen der zweiten Schnittstelle (17, 37, 54, 71) zur Festlegung des Ultraschallwandlers (4, 31, 51, 72) und dem Grundkörper (19, 40, 56, 73) mindestens ein vibrationsentkoppelndes Strukturelement (11, 39, 55, 75) angeordnet ist, welches Strukturelement (11, 39, 55, 75) als Festkörper ausgebildet ist, welcher Festkörper jeweils eine oder mehrere Schnittstellen mit anderen Elementen des Vibrationsentkopplungselements (10, 30, 50, 70) aufweist und wobei das Strukturelement (11, 39, 55, 75) eine kugel-, ellipsoid-, torus- oder vielflächig-polyederförmige Gestalt aufweist, **dadurch gekennzeichnet, dass** das Strukturelement (11, 39, 55, 75) über gebogene, stabförmige Verbindungselemente (76) mit der zweiten Schnittstelle (17, 37, 54, 71) und dem Grundkörper (19, 40, 56, 73) verbunden ist.

2. Anordnung nach Anspruch 1, **dadurch gekennzeichnet, dass** das Vibrationsentkopplungselement (10, 30, 50, 70) monolithisch aufgebaut ist.

3. Anordnung nach einem der vorhergehenden Ansprüche, **dadurch gekennzeichnet, dass** die Länge der stabförmigen Verbindungselemente (76) größer oder gleich lambda/8, vorzugsweise größer oder gleich lambda/4. des Ultraschallsignals entspricht, wobei lambda die Wellenlänge des Ultraschalls in dem Medium ist.

4. Anordnung nach einem der vorhergehenden Ansprüche, **dadurch gekennzeichnet, dass** das Vibrationsentkopplungselement (10, 30, 50, 70) ein metallisches Bauteil ist und zumindest bereichsweise aus einem der folgenden Materialien besteht:
a) Stahl, insbesondere Edelstahl oder Werkzeugstahl;
b) Titan oder einer Titanlegierung;
c) einer Nickelbasislegierung
d) Aluminium oder einer Aluminiumlegierung
e) einer Chrom-Cobalt-Molybdän-Legierung
f) einer Bronzelegierung
g) einer Edelmetalllegierung
h) einer Kupferlegierungen

5. Anordnung nach einem der vorhergehenden Ansprüche, **dadurch gekennzeichnet, dass** das Vibrationsentkopplungselement (10, 30, 50, 70) abschnittsweise aus mehreren schweißbaren Metallen und/oder Metalllegierungen besteht, welche nahtfrei, insbesondere klebenaht-, schweißnaht- oder lötnahtfrei, miteinander verbunden sind.

6. Anordnung nach einem der vorhergehenden Ansprüche, **dadurch gekennzeichnet, dass** das Vibrationsentkopplungselement (30, 70) einen integral ausgebildeten Kanal (44, 78) zur Führung eines Strom- und/oder Signalkabels aufweist, welcher Kanal (44, 78) durch das Strukturelement (39, 75) verläuft.

7. Anordnung nach einem der vorhergehenden Ansprüche, **dadurch gekennzeichnet, dass** zwischen zweiter Schnittstelle (71) und dem Grundkörper (73) eine offene Struktur (74) vorgesehen ist, wobei eines oder mehrere Strukturelemente (75) Teile dieser offenen Stützstruktur (74) sind.

8. Anordnung nach einem der vorhergehenden Ansprüche, **dadurch gekennzeichnet, dass** das Vibrationsentkopplungselement (10, 30, 50, 70) durch selektives Laserschmelzen hergestellt ist.

9. Anordnung nach einem der vorhergehenden Ansprüche, **dadurch gekennzeichnet, dass** das Vibrationsentkopplungselement in ein im Behältnis eingebrachtes Loch, insbesondere ohne Verbindung durch einen Sensorstutzen, einsetzbar ist.

10. Anordnung nach einem der vorhergehenden Ansprüche, wobei das Strukturelement bzw. die Strukturelemente massiv ist bzw. sind, wobei die Masse eines Strukturelements mindestens 80%, beispielsweise mindestens 90% und bevorzugt mindestens 95% der Masse eines mit dem Strukturelement formgleichen massiven Referenzkörpers beträgt, der aus dem gleichen Werkstoff wie das Strukturelement besteht.

11. Ultraschall-Durchflussmessgerät mit einem Messrohr und zumindest zwei am Messrohr (26, 42, 59) angeordneten Anordnungen (3, 46, 49, 77), gemäß Anspruch 1-10.

12. Ultraschall-Füllstandsmessgerät mit zumindest einer an der Behälterwand angeordneten Anordnung (3, 46, 49, 77), gemäß Anspruch 1-10.

## Claims

1. Arrangement designed to transmit and/or receive an ultrasonic wanted signal (U) in a measured medium (M) comprising at least an ultrasonic transducer and a vibration decoupling element (10, 30, 50, 70) to fix at least an ultrasonic transducer (4, 31, 51, 72) in a vessel, wherein the vibration decoupling element (10, 30, 50, 70) or the ultrasonic transducer (4, 31, 51, 72) is designed to emit ultrasonic wanted signals (U) to a measured medium (M) via a coupling surface (E), and wherein the vibration decoupling element (10, 30, 50, 70) has a first interface at which the vibration decoupling element (10, 30, 50, 70) can be connected to the vessel or to a sensor nozzle (25, 58) fixed on the vessel, wherein the vessel can be partially or completely filled with the measured medium (M),
wherein the vibration decoupling element (10, 30, 50, 70) has a meter body (19, 40, 56, 73) to fix the vibration decoupling element (10, 30, 50, 70) on the sensor nozzle (58) or the vessel, and has a second interface (17, 37, 54, 71) to fix the ultrasonic transducer (4, 31, 51, 72), wherein at least a vibration-decoupling structural element (11, 39, 55, 75) is arranged between the second interface (17, 37, 54, 71) to fix the ultrasonic transducer (4, 31, 51, 72) and the meter body (19, 40, 56, 73), wherein said structural element (11, 39, 55, 75) is designed as a solid body, wherein said solid body has one or more interfaces with other elements of the vibration decoupling element (10, 30, 50, 70) and wherein the structural element (11, 39, 55, 75) has a spherical, ellipsoidal, toroidal or polyhedral design,
**characterized in that** the structural element (11, 39, 55, 75) is connected to the second interface (17, 37, 54, 71) and to the meter body (19, 40, 56, 73) via curved, rod-like connection elements (76).

2. Arrangement as claimed in Claim 1, **characterized in that** the vibration decoupling element (10, 30, 50, 70) has a monolithic design.

3. Arrangement as claimed in one of the previous claims, **characterized in that** the length of the rod-like connection elements (76) is greater than or equal to lambda/8, preferably greater than or equal to lambda/4, of the ultrasonic signal, where lambda is the wavelength of the ultrasound in the medium.

4. Arrangement as claimed in one of the previous claims, **characterized in that** the vibration decoupling element (10, 30, 50, 70) is a metal component and is at least partially made from one of the following materials:
a) Steel, particularly stainless steel or tool steel;
b) Titanium or a titanium alloy;
c) A nickel-based alloy;
d) Aluminum or an aluminum alloy;
e) A chrome-cobalt-molybdenum alloy;
(f) A bronze alloy;
(g) A precious metal alloy;
(h) A copper alloy.

5. Arrangement as claimed in one of the previous claims, **characterized in that** the vibration decoupling element (10, 30, 50, 70) is made, in sections, from several weldable metals and/or metal alloys, which can be connected seamlessly, particularly without adhesive seams, welding seams or solder seams.

6. Arrangement as claimed in one of the previous claims, **characterized in that** the vibration decoupling element (30, 70) comprises an integrally formed channel (44, 78) for conducting a power and/or signal cable, wherein said channel (44, 78) runs through the structural element (39, 75).

7. Arrangement as claimed in one of the previous claims, **characterized in that** an open structure (74) is provided between the second interface (71) and the meter body (73), wherein one or more structure elements (75) form parts of this open support structure (74).

8. Arrangement as claimed in one of the previous claims, **characterized in that** the vibration decoupling element (10, 30, 50, 70) is made using selective laser melting.

9. Arrangement as claimed in one of the previous claims, **characterized in that** the vibration decoupling element can be inserted in a hole introduced in the vessel, particularly without a connection by means of a sensor nozzle.

10. Arrangement as claimed in one of the previous claims, wherein the structure element/elements is/are solid, wherein the mass of a structural element is at least 80 %, for example at least 90 % and preferably at least 95 % of the mass of a solid reference body that is identical in design to the structural element, wherein said reference body is made from the same material as the structural element.

11. Ultrasonic flowmeter with a measuring tube and at least two arrangements (3, 46, 49, 77) arranged on the measuring tube (26, 42, 59), as claimed in Claim 1 to 10.

12. Ultrasonic level measuring device with at least an arrangement (3, 46, 49, 77) arranged on the wall of the vessel, as claimed in Claims 1 to 10.

## Revendications

1. Arrangement destiné à l'émission et/ou à la réception d'un signal ultrasonore utile (U) dans un produit mesuré (M) comprenant au moins un transducteur ultrasonore et un élément de découplage des vibrations (10, 30, 50, 70) pour fixer au moins un transducteur ultrasonore (4, 31, 51, 72) dans un réservoir, l'élément de découplage des vibrations (10, 30, 50, 70) ou le transducteur ultrasonore (4, 31, 51, 72) étant conçu pour émettre des signaux ultrasonores utiles (U) vers un produit mesuré (M) par l'intermédiaire d'une surface de couplage (E), et l'élément de découplage des vibrations (10, 30, 50, 70) présentant une première interface au niveau de laquelle l'élément de découplage des vibrations (10, 30, 50, 70) peut être connecté au réservoir ou à un support de capteur (25, 58) fixé au réservoir, lequel réservoir peut être partiellement ou complètement rempli avec le produit mesuré (M),
l'élément de découplage des vibrations (10, 30, 50, 70) comprenant un corps de base (19, 40, 56, 73) pour fixer l'élément de découplage des vibrations (10, 30, 50, 70) au support de capteur (58) ou au réservoir, et comprenant une deuxième interface (17, 37, 54, 71) pour fixer le transducteur ultrasonore (4, 31, 51, 72), au moins un élément de structure de découplage des vibrations (11, 39, 55, 75) étant disposé entre la deuxième interface (17, 37, 54, 71) pour fixer le transducteur ultrasonore (4, 31, 51, 72) et le corps de base (19, 40, 56, 73), lequel élément de structure (11, 39, 55, 75) étant formé comme un corps solide, lequel corps solide présentant respectivement une ou plusieurs interfaces avec d'autres éléments de l'élément de découplage des vibrations (10, 30, 50, 70) et l'élément de structure (11, 39, 55, 75) présentant une forme sphérique, ellipsoïdale, toroïdale ou polyédrique,
**caractérisé en ce que** l'élément de structure (11, 39, 55, 75) est relié à la deuxième interface (17, 37, 54, 71) et au corps de base (19, 40, 56, 73) par l'intermédiaire d'éléments de liaison (76) courbés, en forme de tige.

2. Arrangement selon la revendication 1, **caractérisé en ce que** l'élément de découplage des vibrations (10, 30, 50, 70) est de construction monolithique.

3. Arrangement selon l'une des revendications précédentes, **caractérisé en ce que** la longueur des éléments de liaison (76) en forme de tige correspond à une valeur supérieure ou égale à lambda/8, de préférence supérieure ou égale à lambda/4, du signal ultrasonore, lambda étant la longueur d'onde des ultrasons dans le produit.

4. Arrangement selon l'une des revendications précédentes, **caractérisé en ce que** l'élément de découplage des vibrations (10, 30, 50, 70) est un composant métallique et est constitué au moins par zones de l'un des matériaux suivants :
a) Acier, notamment acier inoxydable ou acier à outils ;
b) Titane ou alliage de titane ;
c) Alliage à base de nickel ;
d) Aluminium ou alliage d'aluminium ;
e) Alliage chrome-cobalt-molybdène ;
(f) Alliage de bronze ;
(g) Alliage de métaux précieux ;
(h) Alliage de cuivre.

5. Arrangement selon l'une des revendications précédentes, **caractérisé en ce que** l'élément de découplage des vibrations (10, 30, 50, 70) est constitué, par tronçons, de plusieurs métaux et/ou d'alliages métalliques soudables, qui sont reliés entre eux sans joints, notamment sans joints de colle, de soudure ou de brasage.

6. Arrangement selon l'une des revendications précédentes, **caractérisé en ce que** l'élément de découplage des vibrations (30, 70) comprend un canal (44, 78) formé d'un seul tenant destiné à guider un câble d'alimentation et/ou de signal, lequel canal (44, 78) s'étend à travers l'élément de structure (39, 75).

7. Arrangement selon l'une des revendications précédentes, **caractérisé en ce qu'**une structure ouverte (74) est prévue entre la deuxième interface (71) et le corps de base (73), un ou plusieurs éléments de structure (75) faisant partie de ladite structure de support ouverte (74).

8. Arrangement selon l'une des revendications précédentes, **caractérisé en ce que** l'élément de découplage des vibrations (10, 30, 50, 70) est fabriqué par fusion sélective au laser.

9. Arrangement selon l'une des revendications précédentes, **caractérisé en ce que** l'élément de découplage des vibrations peut être inséré dans un trou pratiqué dans le réservoir, notamment sans liaison à travers un support de capteur.

10. Arrangement selon l'une des revendications précédentes, pour lequel le ou les éléments de structure est/sont solide(s), la masse d'un élément de structure représentant au moins 80 %, par exemple au moins 90 % et de préférence au moins 95 % de la masse d'un corps de référence solide de forme identique à l'élément de structure et constitué du même matériau que l'élément de structure.

11. Débitmètre à ultrasons comprenant un tube de mesure et au moins deux arrangements (3, 46, 49, 77) disposés sur le tube de mesure (26, 42, 59), selon les revendications 1 à 10.

12. Transmetteur de niveau à ultrasons comprenant au moins un arrangement (3, 46, 49, 77) disposé sur la paroi du réservoir, selon les revendications 1 à 10.
